# EUROPÄISCHE PATENTSCHRIFT

(11) **EP 3 899 057 B1**
(45) Veröffentlichungstag und Bekanntmachung des Hinweises auf die Patenterteilung: **14.12.2022**
(21) Anmeldenummer: 19827679.2
(22) Anmeldetag: 16.12.2019
(51) Int. Cl.: C21B 13/00, C21B 13/12

(54) **VERFAHREN UND VORRICHTUNG ZUR DIREKTREDUKTION MIT ELEKTRISCH AUFGEHEIZTEM REDUKTIONSGAS**
METHOD AND DEVICE FOR DIRECT REDUCTION WITH ELECTRICALLY HEATED REDUCING GAS
PROCÉDÉ ET DISPOSITIF DE RÉDUCTION DIRECTE À L'AIDE D'UN GAZ DE RÉDUCTION CHAUFFÉ ÉLECTRIQUEMENT

(30) Priorität: 17.12.2018 EP 18213141
(43) Veröffentlichungstag der Anmeldung: 27.10.2021
(73) Patentinhaber: Primetals Technologies Austria GmbH, 4031 Linz (AT)
(72) Erfinder: HAUZENBERGER, Franz, 4030 Linz (AT); MILLNER, Robert, 3382 Loosdorf (AT); REIN, Norbert, 1060 Wien (AT); ROSENFELLNER, Gerald, 3355 Ertl (AT); OFNER, Hanspeter, 4055 Pucking (AT); WURM, Johann, 4283 Bad Zell (AT)
(74) Vertreter: Metals@Linz
(86) Internationale Anmeldenummer: PCT/EP2019/085350
(87) Internationale Veröffentlichungsnummer: WO 2020/127049

(56) Entgegenhaltungen:
- WO-A1-99/11571
- WO-A1-2014/040997
- BE-A6- 1 016 305
- CN-U- 207 567 268
- US-A1- 2004 226 406

## Beschreibung

### Gebiet der Technik

Die Erfindung betrifft ein Verfahren zur Direktreduktion von Metalloxiden unter Verwendung eines Reduktionsgases, das auf zumindest einem Vorläufergas basiert, wobei zumindest ein Vorläufergas auf durch katalytische Reformierung von kohlenwasserstoffhaltigem Gas in einem Reformer erhaltenem Reformergas basiert. Sie betrifft auch eine Vorrichtung zur Direktreduktion von Metalloxiden mittels eines Reduktionsgases, umfassend einen katalytischen Reformer zur Herstellung eines Reformergases, eine Reformergasleitung zur Ausleitung von Reformergas aus dem katalytischen Reformer, ein Reduktionsaggregat, und eine Reduktionsgasleitung zur Einleitung von Reduktionsgas in das Reduktionsaggregat.

### Stand der Technik

Herstellung von Metallen mittels Direktreduktion von Metalloxiden durch ein mittels Reformierung von kohlenwasserstoffhaltigen Gasen hergestelltes Reduktionsgas ist bekannt - beispielsweise ist das MIDREX^{®}-Verfahren zur Direktreduktion von Eisenoxiden wirtschaftlich sehr bedeutend. Das Reduktionsgas wird dabei zwecks Direktreduktion in einen mit dem Metalloxid befüllten Reduktionsschacht eingeleitet und reagiert beim Durchströmen mit der Füllung. Die Reaktionskinetik für die Reduktion ist bei höherer Temperatur des Reduktionsgases günstiger - um bei einer vergleichsweise tieferen Einleitungstemperatur des Reduktionsgases eine gewünschte Anlagenleistung zu erreichen, müsste bei einem gegebenem Reduktionsschacht die spezifische Reduktionsgasmenge und eventuell der Anlagendruck erhöht werden, oder leichter reduzierbare Rohstoffe - beispielsweise Pellets - müssten verwendet werden, welche mit bedeutend höheren Kosten verbunden sind. Dem maximal einstellbaren Anlagendruck und der maximal einleitbaren spezifischen Reduktionsgasmenge sind jedoch Grenzen gesetzt, da ansonsten der Druckverlust zu hoch wird und zu einer Behinderung des Materialflußes führt. Zur Einstellung einer gewünschten Einleitungstemperatur muss von dem Temperaturniveau des den Reformer verlassenden Gases ausgegangen werden. Einer Steigerung dieses Temperaturniveaus sind jedoch Temperaturgrenzen des Reformers gesetzt.

Um die Produktionsleistung trotz solcher Randbedingungen von Reduktionsschacht und Reformer anheben zu können, werden oft zwischen Reformer und Reduktionsschacht Maßnahmen zur Erhöhung der Einleitungstemperatur durchgeführt. Beispielsweise ist es bekannt, durch Einbringung von Sauerstoff in den Gasstrom temperaturerhöhende Verbrennung von reduzierenden Bestandteilen einzuleiten. Das hat jedoch den Nachteil, dass die Reduktionskraft des eingeleiteten Reduktionsgases abnimmt, und sich der spezifische Energieverbrauch der Direktreduktion insgesamt erhöht. Temperaturerhöhung durch Verbrennung von zusätzlichem Erdgas mit Sauerstoff führt zwar zu einer gleichzeitigen Erhöhung der Reduktionsgasmenge, kann aber Probleme durch Veränderung der Reduktionsgaszusammensetzung, Rußbildung, ungünstige Gasströmungen verursachen, und muss genau kontrolliert werden.

US6478841B1 und CN207567268U offenbaren einen Teil des bekannten Standes der Technik auf dem technischen Gebiet.

### Zusammenfassung der Erfindung

### Technische Aufgabe

Es sollen ein Verfahren und eine Vorrichtung vorgestellt werden, die eine Erhöhung der Einleitungstemperatur und Steigerung der Produktionsleistung ohne die Nachteile bekannter Verfahren erlauben.

### Technische Lösung

Diese Aufgabe wird gelöst durch ein Verfahren nach Anspruch 1.

Reduktionsgas ist ein Gas, das in ein die zu reduzierenden Metalloxide enthaltendes Reduktionsaggregat - beispielsweise ein Reduktionsschacht oder ein Wirbelschichtaggregat - eingeleitet wird, um dort die Metalloxide zumindest teilweise zu reduzieren.

Ein Reduktionsgas, das auf zumindest einem Vorläufergas basiert, wobei zumindest ein Vorläufergas auf durch katalytische Reformierung von kohlenwasserstoffhaltigem Gas in einem Reformer erhaltenem Reformergas basiert und bei der Zubereitung des Reduktionsgases mittels elektrischer Energie aufgeheizt wird, wird beispielsweise Reduktionsgas A genannt. Zur Direktreduktion kann entweder nur Reduktionsgas A verwendet werden, oder es können zusätzlich zu Reduktionsgas A noch ein weiteres Reduktionsgas oder mehrere weitere Reduktionsgase - auch genannt Zusatzreduktionsgase - verwendet werden - dabei müssen die für Reduktionsgas A genannten Bedingungen für die weiteren Reduktionsgase nicht gelten.

Als katalytische Reformierung bezeichnet man die Umsetzung von kohlenwasserstoffhältigen Stoffen, insbesondere Gasen, mit H₂O und CO₂ in Gegenwart eines Katalysators in einem katalytischen Reformer zur Herstellung von H₂- und COhaltigem Gas, welches im Rahmen dieser Anmeldung Reformergas genannt wird.

Reformergas tritt aus dem Reformer in der Regel mit einer Austrittstemperatur im Bereich von 850°C bis 970°C aus.

Die Metalloxide umfassen bevorzugterweise Eisenoxide, besonders bevorzugt sind sie Eisenoxide. Eisenoxide sind beispielsweise hämatitische oder magnetitische Erze, oder Agglomerate wie beispielsweise Eisenerzpellets.

Es wird unter Verwendung eines Reduktionsgases reduziert, das auf zumindest einem Vorläufergas basiert - bei der Zubereitung des Reduktionsgases wird also zumindest ein Vorläufergas verwendet. Zumindest ein Vorläufergas basiert auf dem Reformergas; es können auch mehrere Vorläufergase auf dem Reformergas basieren. Bei der Zubereitung dieses Reduktionsgases wird zumindest ein Vorläufergas mittels elektrischer Energie aufgeheizt. Erfindungsgemäß wird zumindest ein auf Reformergas basierendes Vorläufergas mittels elektrischer Energie aufgeheizt.

### Ein weiteres Vorläufergas kann beispielsweise

- eine nicht reformierte Teilmenge eines für die Reformierung vorgesehenen kohlenwasserstoffhaltigen Gases,
- Wasserstoff H₂,
- Kohlenmonoxid CO,
- kohlenwasserstoffhaltige Gase, wie beispielsweise auf Basis LPG, PAH, BTEX, CH₄, CmHn, Erdgas, und/oder eine Mischung aus diesen Gasen,
- ein aus einem Reduktionsaggregat, in dem die Metalloxide reduziert werden, abgezogenes Topgas, oder aus dem bei Durchführung des erfindungsgemäßen Verfahrens aus dem Reduktionsaggregat, in dem die Metalloxide direktreduziert werden, abgezogenes Topgas,
- Inertgase, wie beispielsweise N₂, Ar,
sein,
oder eine Mischung aus mehreren dieser beispielhaft angeführten Gase, oder eine Mischung eines anderen Gases mit einem oder mehreren dieser beispielhaft angeführten Gase. Zumindest ein weiteres Vorläufergas enthält gegenüber Metalloxiden, bevorzugt Eisenoxiden, reduzierend wirkende Gaskomponenten, oder besteht aus solchen Gaskomponenten. Weiteres Vorläufergas kann aber auch gegenüber Metalloxiden inerte Gaskomponenten, oder aufkohlend wirkende Gaskomponenten enthalten oder aus solchen Gaskomponenten bestehen.

Das Reformergas ist das bei katalytischer Reformierung von kohlenwasserstoffhaltigem Gas - wie beispielsweise Erdgas, Methan, liquified natural gas LNG, liquified petroleum gas LPG, Koksofengas COG, Biogas; es kann ein reines Gas sein oder ein Gasgemisch - in einem Reformer erhaltene Produkt. Auf dem Reformergas basierendes Vorläufergas kann zumindest eine Teilmenge des Reformergases umfassen, es kann auch das gesamte Reformergas umfassen. Auf dem Reformergas basierendes Vorläufergas kann auch aus einer Teilmenge des Reformergases oder dem gesamten Reformergas bestehen. Auf dem Reformergas basierendes Vorläufergas kann auch durch Veränderung des Reformergases hergestellt werden, beispielsweise durch Veränderung von Druck, Temperatur, Zusammensetzung. Die Zusammensetzung kann beispielsweise durch Zufuhr anderer Gase - wie beispielsweise Erdgas - verändert werden, durch Abtrennung von Gaskomponenten, durch Reaktionen im Reformergas - solche Reaktionen können beispielsweise durch Druck- oder Temperaturänderung beziehungsweise durch Zufuhr anderer Gase hervorgerufen werden.

### Vorteilhafte Wirkungen der Erfindung

Erfindungsgemäß wird bei der Zubereitung des Reduktionsgases zumindest ein auf Reformergas basierendes Vorläufergas mittels elektrischer Energie aufgeheizt.

Das hat den Vorteil, dass zur Temperaturerhöhung kein Sauerstoff oder Verbrennungsprodukte eingebracht werden, und damit verbundene Probleme hinsichtlich Oxidation reduzierender Gaskomponenten oder Änderung der Gaszusammensetzung vermieden werden. Im Vergleich zu sauerstoffbasierten Verfahren zur Temperaturerhöhung kann die Leistung einer Direktreduktionsanlage deutlich vergrößert werden, da keine reduzierenden Gaskomponenten zur Temperaturerhöhung verbraucht werden. Je niedriger die Temperatur des Vorläufergases ist, desto ausgeprägter ist dabei der Vorteil einer elektrischen Aufheizung: bei einer größeren Differenz zu einer angestrebten Endtemperatur muss bei niedrigerer Vorläufergastemperatur mehr Gas verbrannt werden, um durch die Verbrennung die Temperatur entsprechend zu erhöhen - es würden also mehr reduzierende Gaskomponenten im Vorläufergas oxidiert werden, was das Reduktionspotential für Metalloxide verringert.

Auch die Sicherheit wird erhöht, weil sich keine explosionsfähigen Mischungen mit Sauerstoff bilden können. Die elektrische Aufheizung kann auch dazu führen, dass chemische Reaktionen rascher ablaufen und sich neue Gasgleichgewichte einstellen. Gemäß der Erfindung sind Plasma oder Radikale gebildet, die besonders reaktiv sind; gegebenenfalls wird dabei auch die Zusammensetzung eines Plasma-Trägergases durch chemische Reaktionen und/oder Moleküldissoziation verändert.

Optional können zusätzlich auch ein weiteres Vorläufergas oder mehrere weitere Vorläufergase mittels elektrischer Energie aufgeheizt werden.

Bevorzugt wird durch die elektrische Energie das auf Reformergas basierende Vorläufergas auf eine Temperatur aufgeheizt, die in einem Ausmaß von bis zu 200°C, bevorzugt bis zu 100°C, besonders bevorzugt bis zu 70°C, über dessen Austrittstemperatur aus dem Reformer liegt. Beispielsweise wird auf Reformergas basierendes Vorläufergas, das mit einer Austrittstemperatur von 900°C aus dem Reformer austritt, durch die elektrische Energie auf 970°C erhitzt.

Je größer die durch Aufheizung mittels elektrischer Energie hervorzurufende Temperaturerhöhung ist, desto unwirtschaftlicher wird diese Aufheizung im Vergleich zu einer übermäßigen Temperaturerhöhung im Reformer; daher ist eine Obergrenze von 200°C, bevorzugt bis zu 100°C, besonders bevorzugt bis zu 70°C, Temperaturerhöhung für die Aufheizung vorgesehen.

Bevorzugt wird das eine weitere Vorläufergas oder die mehreren weiteren Vorläufergase, die durch elektrische Energie aufgeheizt werden, dabei auf eine Temperatur aufgeheizt, die in einem Ausmaß von bis zu 200 °C über der Austrittstemperatur von Reformergas aus dem Reformer liegt.

Vom Austritt aus dem Reformer bis zur Einleitung in ein die zu reduzierenden Metalloxide enthaltendes Reduktionsaggregat kann Wärme an die Umgebung verloren gehen. Einspeisung von anderen Gasen - beispielsweise Zusatzgas oder weiteres Vorläufergas - mit gegenüber Reformergas geringerer Temperatur, die gegebenenfalls zur Herstellung des Reduktionsgases erfolgt, führt zu geringerer Temperatur des Reduktionsgases. Durch Aufheizung mittels elektrischer Energie kann ein Wärmeverlust an die Umgebung beziehungsweise Temperaturerniedrigung infolge Einspeisung zumindest teilweise kompensiert werden, und dem Reduktionsgas die gewünschte Temperatur für den Eintritt in das die zu reduzierenden Metalloxide enthaltende Reduktionsaggregat gegeben werden.

Damit das Reduktionsgas beim Einleiten zumindest nicht wesentlich kühler als die Austrittstemperatur aus dem Reformer ist, ist Temperaturerhöhung um zumindest 10°C, besonders bevorzugt zumindest 20°C, ganz besonders bevorzugt zumindest 30°C, und überaus bevorzugt zumindest 50°C über die Austrittstemperatur bevorzugt.

Bevorzugt wird das eine weitere Vorläufergas oder die mehreren weiteren Vorläufergase, die durch elektrische Energie aufgeheizt werden, dabei auf eine Temperatur aufgeheizt, die in einem Ausmaß von zumindest 10°C, besonders bevorzugt zumindest 20°C, ganz besonders bevorzugt zumindest 30°C, und überaus bevorzugt zumindest 50°C über der Austrittstemperatur bevorzugt.

Bei elektrischer Aufheizung von auf dem Reformergas basierenden Vorläufergas nach Reformierung, beziehungsweise bei elektrischer Aufheizung eines anderen Vorläufergases, kann der Reformerbetrieb optimiert werden, ohne dass damit gegebenenfalls verbundene geringere Temperatur des Reformergases sich auf die Produktivität der Direktreduktion negativ auswirkt. Für verbesserte Produktivität der Direktreduktion günstige Änderungen der Temperatur und auch der Zusammensetzung des Reduktionsgases können nach der Reformierung durchgeführt werden. Der Reformer muss also beispielsweise nicht jenseits von für seine Funktion und günstigen Standzeiten optimalen Temperaturen betrieben werden, um eine gewünschte Reduktionsgastemperatur oder -zusammensetzung sicherzustellen. Stattdessen kann der Reformer schonend betrieben werden, was seine Lebensdauer, im speziellen der Reformerrohre, aufgrund geringeren Kriechens in Längs- und Durchmesserrichtung der Reformerrohre, beziehungsweise die Lebensdauer des Katalysators im Reformer verlängert. Das steigert die Wirtschaftlichkeit des Verfahrens zur Direktreduktion. Vermindertes Temperaturniveau im Reformer führt auch zu verminderter Temperatur des Reformerabgases und vermindertem Brennstoffbedarf; der damit verbundene geringere Energieverlust des Verfahrens steigert die Wirtschaftlichkeit.

Schonende Fahrweise eines katalytischen Reformers bei vermindertem Temperaturniveau kann zu einer eine optimale Direktreduktion nicht unterstützenden Zusammensetzung des Reformergases führen; speziell hinsichtlich CH₄-Schlupf und CO₂-Gehalt im Reformergas.

Durch Aufheizung mittels elektrischer Energie kann beispielsweise die - aufgrund von CH₄-Schlupf und damit verbundenem höheren CH₄-Gehalt im Reduktionsgas - verminderte Leistung bei der Reduktion kompensiert werden. Elektrische Aufheizung für ein solches Reformergas hat den Vorteil, dass das Reduktionspotential nicht auch noch durch Umsetzung reduzierender Gaskomponenten zwecks Aufheizung vermindert wird.

Ebenso kann alterungsbedingte Degradierung beziehungsweise Deaktivierung des Katalysators im Reformer durch die elektrische Aufheizung teilweise kompensiert werden, und dadurch die Notwendigkeit von aufwändigem und teurem Austausch des Katalysatormaterials hinausgezögert werden. Zudem kann mittels elektrischer Aufheizung auf Temperaturen aufgeheizt werden, die bei Aufheizung im Reformer nicht erreichbar wären.

Vorteilhaft ist es auch, dass durch die Entkopplung der Temperatur des Reduktionsgases von der Temperatur des Reformergases - und indirekt dadurch gegebenenfalls auch Entkopplung der Zusammensetzung des Reduktionsgases von der Zusammensetzung des Reformergases - einfach und schnell die beste Temperatur für die jeweils vorliegenden Metalloxide und die aktuelle Coatingmenge eingestellt werden kann. Der Regelbereich der elektrischen Aufheizung ist größer und die Regelung ist schneller im Vergleich zu einer Beeinflussung im Reformer. Der Betrieb der Reformierung und der Betrieb der Direktreduktion können so unabhängig voneinander optimiert werden, was das Verfahren insgesamt wirtschaftlicher macht. Im Vergleich zu Erhitzung mittels Verbrennung mit partieller Oxidation ist elektrische Erhitzung schneller und genauer regelbar, da nicht auf Verbrennungsreaktionen Rücksicht genommen werden muss. Im Vergleich zu Erhitzung mittels indirekter Aufheizung über Wärmetauscher ist elektrische Erhitzung schneller und genauer regelbar.

Speziell bei Inbetriebnahme einer Direktreduktionsanlage zur Durchführung des erfindungsgemäßen Verfahrens ist die erfindungsgemäße elektrische Aufheizung günstig. Sie eröffnet die Möglichkeit, in einem Reduktionsgas, das nur oder auch auf einem Reformergas basiert, in dem noch wenige Bestandteile reformiert sind - weil der Reformer bei der Inbetriebnahme noch nicht in vollem Umfang arbeitet -, durch schnell regelbare Temperaturerhöhung in-situ-Reformierung vor und/oder nach Kontakt mit den Metalloxiden zu begünstigen.

Nach einer Variante wird zumindest eine Teilmenge der elektrischen Energie direkt in das mittels elektrischer Energie aufzuheizende Vorläufergas eingebracht, beispielsweise mittels Widerstandsheizung mit Heizspirale, Lichtbogen zwischen Elektroden. Direkte Einbringung hat den Vorteil, dass der Wirkungsgrad sehr hoch ist. Das hat auch den Vorteil, dass bei der Einbringung der Energie stofflich nichts hinzufügt wird. Einfluss auf die stoffliche Zusammensetzung des Reduktionsgases kann bestehen, da der Energieeintrag die Kinetik chemischer Reaktionen von im Vorläufergas vorhandenen Komponenten miteinander beeinflusst, beziehungsweise beispielsweise an Elektrodenoberflächen Umsetzungen von im Vorläufergas vorhandenen Komponenten ablaufen.

Nach der Erfindung gemäß Anspruch 1 wird zumindest eine Teilmenge der elektrischen Energie mittels Plasma, in das Vorläufergas eingebracht. Dabei kann die stoffliche Zusammensetzung des Reduktionsgases beeinflusst werden durch entsprechende Zusammensetzung des Trägermediums. Das Trägermedium kann Gas und/oder Flüssigkeit - beispielsweise Erdöl - und/oder Feststoff sein. Das Trägermedium ist bevorzugt frei von molekularem Sauerstoff. Wenn es sich um ein Plasma handelt, das mit einem Trägergas betrieben wird, ist es eine bevorzugte Variante, dass zumindest ein Teil des Trägergases ein Mitglied der folgenden Gruppe von Bestandteilen ist:
- ein durch katalytische Reformierung von kohlenwasserstoffhaltigem Gas in einem Reformer erhaltenes Reformergas,
- eine nicht reformierte Teilmenge eines für die Reformierung vorgesehenen kohlenwasserstoffhaltigen Gases,
- Wasserstoff H₂,
- Kohlenmonoxid CO,
- kohlenwasserstoffhaltige Gase, wie beispielsweise auf Basis LPG, PAH, BTEX, CH₄, CmHn, Erdgas, und/oder eine Mischung aus diesen Gasen,
- ein aus einem Reduktionsaggregat, in dem die Metalloxide reduziert werden, abgezogenes Topgas, oder aus dem bei Durchführung des erfindungsgemäßen Verfahrens aus dem Reduktionsaggregat, in dem die Metalloxide direktreduziert werden, abgezogenes Topgas,
- Inertgase, wie beispielsweise N2, Ar.

Das Trägergas wird nämlich durch die hohen Temperaturen im Plasmabrenner zumindest teilweise dissoziieren und bei der Mischung mit dem Vorläufergas normalerweise teilweise wieder rekombinieren. Durch geeignetes Wählen des Trägergases können zusätzliche reduzierende Gaskomponenten wie CO oder H₂ entstehen. Einige Plasmakomponenten - wie beispielsweise atomarer Wasserstoff H - reagieren auch sehr schnell mit Metalloxid, bevorzugt Eisenoxid. Besonders bevorzugt sind Trägergase, welche nach der Mischung zusätzliche reduzierende Verbindungen nach der Rekombination erzeugen oder im Plasmazustand sehr schnell mit dem Metalloxid, bevorzugt Eisenoxid, reagieren.

Grundsätzlich kann ein Trägergas ein Prozessgas - Erdgas eingeschlossen - oder ein Abgas aus einem Verfahren zur Direktreduktion oder aus dem erfindungsgemäßen Verfahren zur Direktreduktion - beispielsweise Topgas aus dem Reduktionsaggregat, also beispielsweise einem Reduktionsschacht oder einem Wirbelschichtaggregat- sein, oder es kann ein Gas aus einer externen Gasquelle - beispielsweise ein Koksofengas COG, Biogas, LNG, Gas auf Basis LPG - sein, wobei diese Gase gekühlt oder vorgewärmt, gereinigte oder ungereinigt eingesetzt werden können. Es kommen in Frage H₂- und/oder CO- und/oder CO₂- und/oder H₂O-haltige und/oder CH₄-haltige Gase und/oder andere kohlenwasserstoffhaltige Gase, gekühlte oder vorgewärmte Gase, gereinigte oder ungereinigte Gase.

Durch die Wahl des Trägermediums kann Einfluss auf die Zusammensetzung des Reduktionsgases ausgeübt werden, da das Trägermedium selbst auch Komponenten zum Reduktionsgas liefern kann. Beispielsweise kann ein gereinigtes Topgas alleine oder in Mischung mit anderen Trägermedien, beispielsweise Koksofengas COG, als Trägermedium genutzt werden. Temperaturen in einem Plasma sind in der Regel sehr hoch. Wenn Verbindungen, deren thermische Zerstörung erwünscht ist, Teil des Trägermediums sind, lässt sich einerseits der Nutzen ihrer thermischen Zerstörung ziehen. Andererseits können Zerstörungsprodukte als reduzierende Gaskomponenten, oder als Vorprodukte für reduzierende Gaskomponenten, des Reduktionsgases genutzt werden. Besonders vorteilhaft ist es auch, Verbindungen, die in einem Reformer schwierig zu reformieren sind, nicht dem Reformer zuzuführen, sondern als Bestandteil des Trägermediums zu nutzen, um Zerstörungsprodukte als reduzierende Gaskomponenten, oder als Vorprodukte für reduzierende Gaskomponenten des Reduktionsgases einer Nutzung zuzuführen. Es kann beispielsweise sein, dass Erdgas höhere Kohlenwasserstoffe beinhaltet, die vor Reformierung in einem Reformer abgetrennt werden müssen. Solche abgetrennten Komponenten können dann als Trägermedien oder Teile davon genutzt werden.

Bevorzugt ist es, als Trägergas Gase beziehungsweise Gasmischungen zu verwenden, deren Einsatz Rußbildung vermeidet. Dazu wird das Verhältnis von kohlenstoffbeziehungsweise kohlenwasserstoffhaltigen Gasbestandteilen zu oxidierenden Gasbestandteilen, wie beispielsweise CO₂, H₂O, sowie die elektrische Leistung und die Größe der Trägermedien- beziehungsweise Gasströme entsprechend kontrolliert.

Der hohe Bedarf elektrischer Energie zum Betrieb von Plasmabrennern würde erwarten lassen, dass Einsatz von Plasmabrennern zur elektrischen Aufheizung des Vorläufergases wirtschaftlich nicht tragbar ist. Es zeigt sich nun unerwarteterweise, dass sich auch bei elektrischer Aufheizung mittels Plasma bei der Verfahrensführung der Direktreduktion im höheren Temperaturbereich wirtschaftlich günstige Ergebnisse erzielen lassen.

Nach einer Variante wird für elektrische Aufheizung vorgesehenes Vorläufergas vor der Aufheizung mittels elektrischer Energie bereits auf andere Weise aufgeheizt, bevorzugt auf zumindest 700 °C, besonders bevorzugt auf zumindest 750 °C. Im Falle von Reformergas als Vorläufergas ist die elektrische Aufheizung also in Flussrichtung des Reformergases nach dem Reformer und nach einer anderen - nicht elektrischen - Aufheizmethode angeordnet, um beispielsweise die Temperaturbegrenzung dieser anderen Aufheizmethode zu umgehen oder die Lebensdauer/Wirtschaftlichkeit dieser anderen Aufheizmethode zu erhöhen.

Nach einer Variante wird für elektrische Aufheizung vorgesehenes Vorläufergas mittels elektrischer Energie auf über 800°C, bevorzugt auf über 900°C, aufgeheizt. Bei Eisenoxiden laufen die Reduktionsreaktionen bei solchen Temperaturen des Reduktionsgases mit wirtschaftlich zufriedenstellender Effizienz ab. Weiters können dadurch auch kostengünstige Eisenoxide mit geringem Reduzierverhalten/geringer Reduzierbarkeit wirtschaftlich eingesetzt werden, weil die Leistungssteigerung durch Temperaturerhöhung für niedrigreduzierbare Stoffen sogar deutlich höher ist.

Das Reduktionsgas wird in ein die zu reduzierenden Metalloxide enthaltendes Reduktionsaggregat - beziehungsweise in die Metalloxide im Reduktionsaggregat - eingeleitet. Im Falle eines Reduktionsschachtes also beispielsweise in ein die Metalloxide enthaltendes Materialbett im Reduktionsschacht, und im Falle eines Wirbelschichtaggregates in eine die Metalloxide enthaltende Wirbelschicht im Wirbelschichtaggregat.

Nach einer Variante beträgt die Temperatur des Reduktionsgases bei der Einleitung in ein die zur reduzierenden Metalloxide enthaltendes Reduktionsaggregat zumindest über 800 °C, bevorzugt zumindest über 900°C, besonders bevorzugt zumindest 940°C, und bis zu 1100°C, bevorzugt bis zu 1050°C, besonders bevorzugt bis zu 1000°C. Bei Eisenoxiden laufen die Reduktionsreaktionen in einem Temperaturbereich dann mit wirtschaftlich zufriedenstellender Effizienz ab. Grundsätzlich soll die Temperatur im Reduktionsaggregat - also beispielsweise einem Reduktionsschacht oder einem Wirbelschichtaggregat - für die Direktreduktion möglichst hoch sein, allerdings wird der verwendbare Bereich nach oben durch das Agglomerationsverhalten - Sticking, Clustering - der Metalloxide, beispielsweise Eisenoxide, begrenzt. Außerdem kann höhere Temperatur bei entsprechender Zusammensetzung des Reduktionsgases dazu beitragen, dass im Reduktionsaggregat Gaskomponenten in-situ reformiert werden. Dies bewirkt eine Erhöhung der Reduktionsgasmenge verbunden mit einer Erhöhung der Reduktanten und damit eine höhere Anlagenleistung und/oder eine Entlastung des katalytischen Reformers und/oder eine höhere Reduktion der Metalloxide.

Zumindest ein Vorläufergas basiert auf dem Reformergas, das heißt, es kann neben dem Reformergas auch andere Bestandteile umfassen. Neben Reformergas kann dieses Vorläufergas nach einer Variante des erfindungsgemäßen Verfahrens auch Hüttenwerksgase - wie beispielsweise Koksofengas, COREX / FINEX Exportgas - und/oder anderen CO Kohlenmonoxid - und/oder H₂ Wasserstoff - und/oder
Kohlenwasserstoff- hältige, allgemein CmHn-hältige, Gase - wie beispielsweise aliphatische Kohlenwasserstoffe wie Methan, auf Basis Liquefied Petroleum Gas (LPG) und/oder aromatische Kohlenwasserstoffe wie Benzol, Toluol, polyzyklische Kohlenwasserstoffe - umfassen. Diese spielen dann zusätzlich zum Reformergas bei der Bereitung des Reduktionsgases ebenfalls eine Rolle und können zur Erhöhung seines Reduktionspotentials beitragen. Beispielsweise können sie im Reduktionsaggregat - also beispielsweise einem Reduktionsschacht oder einem Wirbelschichtaggregat - in-situ reformiert und dadurch für die Reduktion genutzt werden.

Nach einer Variante wird einem Vorläufergas, das mittels elektrischer Energie aufgeheizt wird - beispielsweise dem auf dem Reformergas basierende Vorläufergas -, kohlenwasserstoffhaltiges, allgemein CmHn haltiges - wie beispielsweise aliphatische Kohlenwasserstoffe wie Methan, Gas auf Basis Liquefied Petroleum Gas (LPG) und/oder aromatische Kohlenwasserstoffe wie Benzol, Toluol, polyzyklische Kohlenwasserstoffe -, Zusatzgas zugegeben vor und/oder während und/oder nachdem mittels elektrischer Energie aufgeheizt wird. Dann spielt dieses Zusatzgas bei der Bereitung des Reduktionsgases ebenfalls eine Rolle und kann zur Erhöhung seines Reduktionspotentials beitragen. Außerdem kann der Kohlenstoffgehalt im Produkt der Direktreduktion - bei Eisenoxiden beispielsweise DRI direct reduced iron - durch Erhöhung des Kohlenwasserstoffgehaltes im Reduktionsgas eingestellt werden.

Das Reduktionsgas wird in ein die zu reduzierenden Metalloxide enthaltendes Reduktionsaggregat eingeleitet - im Falle eines Reduktionsschachtes also beispielsweise in ein die Metalloxide enthaltendes Materialbett im Reduktionsschacht, und im Falle eines Wirbelschichtaggregates in eine die Metalloxide enthaltende Wirbelschicht im Wirbelschichtaggregat.

Nach einer bevorzugten Variante wird zumindest eine Teilmenge des kohlenwasserstoffhaltigen Zusatzgases in-situ reformiert, bevor das Reduktionsgas in ein die Metalloxide enthaltendes Reduktionsaggregat eingeleitet wird. Dadurch entstehen zusätzliche reduzierende Gaskomponenten. Die in situ Reformierung erfolgt also beispielsweise, bevor in ein die Metalloxide enthaltendes Materialbett in einem Reduktionsschacht eingeleitet wird, oder bevor in eine die Metalloxide enthaltende Wirbelschicht in einem Wirbelschichtaggregat eingeleitet wird.

Schonende Fahrweise eines katalytischen Reformers bei vermindertem Temperaturniveau und/oder der Betrieb des Reformers mit degradierten/deaktivierten Katalysator kann zu einer eine optimale Direktreduktion nicht unterstützenden Zusammensetzung des Reformergases führen; speziell hinsichtlich CH₄-Schlupf und CO₂-Gehalt im Reformergas. Besonders dann ist es vorteilhaft, wenn durch, beispielsweise durch Zugabe von gegebenenfalls in-situ reformiertem Zusatzgas geförderte, Entkopplung der Zusammensetzung des Reduktionsgases von der Zusammensetzung des Reformergases die günstigste Zusammensetzung des Reduktionsgases für die jeweils vorliegenden Metalloxide eingestellt werden kann. Der Regelbereich ist größer und die Regelung ist schneller im Vergleich zu einer Beeinflussung durch die Betriebsweise der Reformierung, oder im Vergleich zu einer Beeinflussung durch Änderung des zu reformierenden Gases. Der Betrieb der Reformierung und der Betrieb der Direktreduktion können so unabhängig voneinander optimiert werden, was das Verfahren insgesamt wirtschaftlicher macht.

Endotherme in-situ Umsetzung von kohlenwasserstoffhaltigem Gas mit H₂O und CO₂ kann natürlich auch im Reduktionsaggregat - also beispielsweise einem Reduktionsschacht oder einem Wirbelschichtaggregat - ablaufen. Vor Eintritt in das Reduktionsaggregat kann sie stattfinden, wenn H₂O/CO₂ im Gas enthalten ist; im Reduktionsaggregat kann sie stattfinden, wenn H₂O/CO₂ als Reaktionsprodukte bei der Reduktion entstehen. Die Umsetzung läuft in Gegenwart eines metallisierten Eisenbettes verstärkt ab.

Nach einer bevorzugten Variante wird zumindest eine Teilmenge eines kohlenwasserstoffhaltigen Vorläufergases in situ reformiert, bevor das Reduktionsgas in ein die Metalloxide enthaltendes Reduktionsaggregat eingeleitet wird. Dadurch entstehen zusätzliche reduzierende Gaskomponenten. Die in situ Reformierung erfolgt also beispielsweise, bevor das Reduktionsgas in ein die Metalloxide enthaltendes Materialbett in einem Reduktionsschacht eingeleitet wird, oder bevor das Reduktionsgas in eine die Metalloxide enthaltende Wirbelschicht in einem Wirbelschichtaggregat eingeleitet wird.

Bei der Zubereitung des Reduktionsgases wird ein auf dem Reformergas basierendes Vorläufergas mittels elektrischer Energie aufgeheizt.

Es können bei der Zubereitung des Reduktionsgases mehrere auf dem Reformergas basierende Vorläufergase mittels elektrischer Energie aufgeheizt werden.

Es kann bei der Zubereitung des Reduktionsgases auch ein auf dem Reformergas basierendes Vorläufergas mittels elektrischer Energie aufgeheizt werden, und ein oder mehrere weitere auf dem Reformergas basierende Vorläufergase nicht mittels elektrischer Energie aufgeheizt werden.

Es können bei der Zubereitung des Reduktionsgases auch ein oder mehrere auf dem Reformergas basierende Vorläufergase, und zusätzlich auch ein oder mehrere weitere Vorläufergase, die nicht auf dem Reformergas basieren, aufgeheizt werden mittels elektrischer Energie.

Nach einer Variante des erfindungsgemäßen Verfahrens wird der Volumenstrom zumindest eines der Vorläufergase geregelt.

Nach einer Variante des erfindungsgemäßen Verfahrens wird zur Direktreduktion von Metalloxiden zumindest ein Zusatzreduktionsgas verwendet. Zusatzreduktionsgas ist ein Gas, das zusätzlich zum Reduktionsgas in ein die zu reduzierenden Metalloxide enthaltendes Reduktionsaggregat - beispielsweise ein Reduktionsschacht oder ein Wirbelschichtaggregat - eingeleitet wird, um dort die Metalloxide zumindest teilweise zu reduzieren. Zusatzreduktionsgas kann beispielsweise ein Vorläufergas sein; beispielsweise ein Vorläufergas, das nicht mittels elektrischer Energie aufgeheizt wurde.

Zusatzreduktionsgas wird an einem anderen Ort als das Reduktionsgas in das Reduktionsaggregat eingeleitet.

Das zu reduzierende Material Metalloxide durchläuft das Reduktionsaggregat von einer Eingabeöffnung zu einer Entnahmeöffnung.

Nach einer Ausführungsform wird Zusatzreduktionsgas in Richtung des Materialflusses von Eingabeöffnung zu Entnahmeöffnung vor dem Reduktionsgas eingeleitet. Damit kann erreicht werden, dass das Zusatzreduktionsgas zur Reduktion der Metalloxide genutzt wird, bevor - in Richtung des Materialflusses gesehen - das Reduktionsgas auf das Material trifft.

Nach einer anderen Ausführungsform wird das Zusatzreduktionsgas in Richtung des Materialflusses von Eingabeöffnung zu Entnahmeöffnung nach dem Reduktionsgas eingeleitet.

Das Reduktionsgas eignet sich aufgrund der mittels elektrischer Aufheizung erfolgten Temperaturerhöhung gut dazu, mit hoher Temperatur eingeleitet zu werden. Das ist besonders dann günstig, wenn neben Direktreduktion auch Aufkohlung des Materials im Reduktionsaggregat stattfindet. Aufkohlung - Einfügung von Kohlenstoff in elementarer Form, gebunden als Zementit (Fe₃C) oder in Form von gelöstem Kohlenstoff - kann gegebenenfalls - beispielsweise bei Aufkohlung mit CH₄ Methan - aufgrund endothermer Reaktion zu Temperaturerniedrigung führen, was letztendlich kühleres Produkt bei der Entnahme aus dem Reduktionsaggregat bedeutet. Für weitere Verarbeitung des Produktes ist jedoch oft eine möglichst hohe Temperatur des Produktes gewünscht zwecks Verbesserung von Verarbeitbarkeit durch Heißkompaktierung und von Energiebilanz. Elektrische Aufheizung erlaubt es, Temperaturerniedrigung durch Aufkohlung auszugleichen, indem mit entsprechend höherer Temperatur Reduktionsgas eingeleitet wird - das Endprodukt kann dann trotz Aufkohlung mit der gewünschten Temperatur entnommen werden. Bei Verfahren zur Aufheizung des Reduktionsgases, die auf Oxidation mit Sauerstoff und damit verbunden mit Verminderung der Reduktionskraft des Reduktionsgases basieren, würde eine entsprechend hohe Aufheizung einen wirtschaftlich inakzeptabel hohen Verlust an Reduktionskraft - und damit höheren Reduktionsgasverbrauch - bedeuten.

Ein weiterer Gegenstand der vorliegenden Anmeldung ist eine Vorrichtung gemäß Anspruch 10.

Es kann eine Vorläufergasleitung vorhanden sein oder mehrere Vorläufergasleitungen. Vorläufergasleitungen dienen zur Zufuhr von Vorläufergas in die Reduktionsgasleitung.

Die Vorläufergasleitungen münden in die Reduktionsgasleitung. Zumindest eine Vorläufergasleitung geht von der Reformergasleitung aus.

Zumindest eine der von der Reformergasleitung ausgehenden Vorläufergasleitungen umfasst eine elektrische Gasheizvorrichtung, wobei "eine" in "eine elektrische Gasheizvorrichtung" nicht Zahlwort, sondern unbestimmter Artikel ist - Vorläufergasleitungen können jeweils eine einzige oder mehrere elektrische Gasheizvorrichtungen umfassen.

Optional können zusätzlich auch eine oder mehrere weitere Vorläufergasleitungen - die nicht von der Reformergasleitung ausgehen - eine elektrische Gasheizvorrichtung umfassen, wobei "eine" in "eine elektrische Gasheizvorrichtung" nicht Zahlwort, sondern unbestimmter Artikel ist - Vorläufergasleitungen können jeweils eine einzige oder mehrere elektrische Gasheizvorrichtungen umfassen.

Das Reduktionsaggregat ist beispielsweise ein Reduktionsschacht oder ein Wirbelschichtaggregat. In einem Reduktionsschacht befindet sich ein festes, die Metalloxide umfassendes Materialbett; in einem Wirbelschichtaggregat befindet sich eine die Metalloxide enthaltende Wirbelschicht.

Im katalytischen Reformer wird durch katalytische Reformierung von kohlenwasserstoffhaltigem Gas Reformergas erhalten. Dieses wird über die Reformergasleitung aus dem katalytischen Reformer ausgeleitet und in zumindest eine Vorläufergasleitung eingeleitet.

In elektrischen Gasheizvorrichtungen wird Vorläufergas mittels elektrischer Energie aufgeheizt.

Das Reduktionsgas basiert auf Vorläufergas. Jede Vorläufergasleitung mündet in die Reduktionsgasleitung, über die das Reduktionsgas in das Reduktionsaggregat einleitet wird - das Reduktionsgas wird also auf allen Vorläufergasen basieren, die durch die entsprechenden Vorläufergasleitungen in die Reduktionsgasleitung eingeleitet werden. Im Reduktionsaggregat werden die Metalloxide mittels des Reduktionsgases direktreduziert.

Es kann beispielsweise eine einzige Vorläufergasleitung vorhanden sein; diese geht von der Reformergasleitung aus, mündet in die Reduktionsgasleitung, und umfasst zumindest eine elektrische Gasheizvorrichtung.

Es kann auch eine Vorläufergasleitung vorhanden sein, die von der Reformergasleitung ausgeht, eine elektrische Gasheizvorrichtung umfasst, und in die Reduktionsgasleitung mündet, sowie eine zweite Vorläufergasleitung, die gegebenenfalls auch eine elektrische Gasheizvorrichtung umfasst und in die Reduktionsgasleitung mündet. Dabei kann die zweite Vorläufergasleitung beispielsweise von der Reformergasleitung ausgehen, oder von einer Reformerspeisleitung, durch die zu reformierendes Gas dem Reformer zugeführt wird.

Nach einer Variante mündet zumindest eine Zusatzgasleitung in zumindest eine Vorläufergasleitung - wenn von der Vorläufergasleitung eine elektrische Gasheizvorrichtung umfasst ist, beispielsweise vor oder nach der elektrischen Gasheizvorrichtung, oder in die elektrische Gasheizvorrichtung. Zusatzgasleitungen dienen zur Zufuhr von Zusatzgas in Vorläufergas.

Nach einer Variante umfasst die eine elektrische Gasheizvorrichtung umfassende Vorläufergasleitung in Strömungsrichtung des Vorläufergases gesehen vor der elektrischen Gasheizvorrichtung eine nicht-elektrische Aufheizvorrichtung.

Nach einer Variante umfasst die Vorrichtung zur Direktreduktion zumindest eine Zusatzreduktionsgasleitung zur Einleitung von Zusatzreduktionsgas in das Reduktionsaggregat.

Nach einer Variante geht zumindest eine Zusatzreduktionsgasleitung von einer Vorläufergasleitung aus. Bevorzugt umfasst die Vorrichtung zur Direktreduktion von Metalloxiden mittels eines Reduktionsgases zumindest eine Vorrichtung zur Regelung des Volumenstromes zumindest eines Vorläufergases.

Ein weiterer Gegenstand der vorliegenden Anmeldung ist eine Signalverarbeitungseinrichtung mit einem maschinenlesbaren Programmcode, dadurch gekennzeichnet, dass er Regelbefehle zur Durchführung eines erfindungsgemäßen Verfahrens aufweist. Ein weiterer Gegenstand der vorliegenden Anmeldung ist ein maschinenlesbarer Programmcode für eine Signalverarbeitungseinrichtung, dadurch gekennzeichnet, dass der Programmcode Regelbefehle aufweist, welche die Signalverarbeitungseinrichtung zur Durchführung eines erfindungsgemäßen Verfahrens veranlassen.

Ein weiterer Gegenstand der vorliegenden Anmeldung ist ein Speichermedium mit einem darauf gespeicherten erfindungsgemäßen maschinenlesbaren Programmcode.

Die elektrische Gasheizvorrichtung kann beispielsweise mittels Widerstandsheizung über Heizspirale heizen, oder mittels Lichtbogen zwischen Elektroden.

Gemäß der Erfindung umfasst die elektrische Gasheizvorrichtung zumindest zwei Plasmabrenner, ganz besonders bevorzugt umfasst sie zumindest drei Plasmabrenner. Zumindest zwei Plasmabrenner sind unabhängig voneinander betreibbar. Plasmabrenner haben in der Regel bei Dauerbetrieb relativ geringe Standzeiten - die hohen Temperaturen des Lichtbogens und der Lichtbogen an sich beanspruchen besonders die Anode und Kathode des Plasmabrenners stark -, so dass sie oft gewartet beziehungsweise ausgetauscht werden müssen. Entsprechend wäre zu erwarten, dass bei Verfahrensführung mit einem Plasmabrenner kein wirtschaftlicher Betrieb möglich sei, da Austausch beziehungsweise Wartung des Plasmabrenners das Direktreduktionsverfahren unterbrechen würde. Wenn mehrere Plasmabrenner vorhanden sind, kann Wartung beziehungsweise Austausch eines Plasmabrenners erfolgen, während andere Plasmabrenner betrieben werden, so dass das Direktreduktionsverfahren nicht unterbrochen werden muss beziehungsweise Änderungen des Betriebes wie beispielsweise Leistungsreduktion des Direktreduktionsverfahrens nicht erforderlich sind.

Die elektrische Gasheizvorrichtung kann eine Heizkammer mit mehreren Plasmabrennern umfassen, oder mehrere Heizkammern mit jeweils einem oder mehreren Plasmabrennern.

Vorzugsweise umfasst die elektrische Gasheizvorrichtung zumindest eine Heizkammer mit einem Plasmabrenner, mit zumindest einer Ausleitöffnung zur Ausleitung von erhitztem Gas, und mit zumindest einer Einleitöffnung zur Einleitung von Vorläufergas, und mit zumindest einer Heizkammerlängswand in Längserstreckung von der Einleitöffnung zur Ausleitöffnung gesehen, wobei der Plasmabrenner mittig in der Heizkammer angeordnet ist, und wobei die Einleitöffnung zwischen Plasmabrenner und Heizkammerlängswand angeordnet ist. Durch diese Anordnung wird die hohe Wärmeübertragung - beispielsweise Wärmestrahlung und/oder Konvektion des Plasmagases - an die Heizkammerlängswand reduziert, weil das Vorläufergas eine geringere Temperatur als das aus dem Plasmabrenner austretende Gas aufweist. Zu hohe Wärmeübertragung an die Heizkammerlängswand kann zu einem hohen Verschleiß oder Beschädigung der Wände und somit der Heizkammer führen. Eine bevorzugte Variante ist, mehrere Einleitöffnungen vorzusehen, wobei beispielsweise zwischen allen Heizkammerlängswänden und dem Plasmabrenner Einleitöffnungen angeordnet sind.

Grundsätzlich kann auch vorgesehen werden, Einlassöffnungen für Kühlmedien - wie beispielsweise gegebenenfalls ausgemauerte Stutzen und Rohrleitungen zwischen Plasmabrenner und Heizkammerlängswänden vorzusehen, um einen direkten Kontakt von Plasma mit den Wänden zu verhindern. Solche Kühlmedien werden letztendlich mit aufgeheiztem Vorläufergas in das Reduktionsgas eingehen.

Vorzugsweise umfasst die elektrische Gasheizvorrichtung zumindest eine Heizkammer mit einem Plasmabrenner, mit zumindest einer Ausleitöffnung zur Ausleitung von erhitztem Gas, und mit zumindest einer Einleitöffnung zur Einleitung von Vorläufergas, und mit zumindest einer Heizkammerlängswand in Längserstreckung von der Einleitöffnung zur Ausleitöffnung gesehen, wobei die Einleitöffnung so angeordnet ist und die Heizkammer so ausgeformt ist, dass ein eingeleiteter Strom des Vorläufergases spiralförmig um den Plasmabrenner herum zwischen Plasmabrenner und Heizkammerlängswand von der Einleitöffnung zur Ausleitöffnung strömt. Die Form der Einleitung kann dazu beispielsweise gebogen sein, beispielsweise als Teil einer Ellipse oder auf Grundlage eines Splines. Auch durch diese Anordnung wird die hohe Wärmeübertragung - beispielsweise Wärmestrahlung und/oder Konvektion des Plasmagases - an die Wand der Heizkammer reduziert, weil das Vorläufergas eine geringere Temperatur als das aus dem Plasmabrenner austretende Gas aufweist. Zu hohe Wärmeübertragung an die Wand der Heizkammer kann zu einem hohen Verschleiß oder Beschädigung der Wände und somit der Heizkammer führen. Der spiralförmige Wirbel des eingeleiteten Stromes ist kühler als das Plasma beziehungsweise das vom Plasma erhitzte Gas. Die Erhitzung des Gases ist inhomogen, da in erster Linie die sich in der Nähe des Plasmas befindenden Gasmoleküle erhitzt werden, während die sich weiter vom Plasma weg - also beispielsweise in Nähe der Heizkammerlängswand befindenden Gasmoleküle weniger stark erhitzt werden. Mit fortschreitender Bewegung zur Ausleitöffnung hin vermischen sich heißere und kältere Gasmoleküle und eine homogene Gastemperatur stellt sich ein. Vorzugsweise steigt die Temperatur an der Heizkammerlängswand mit fortschreitender Vermischung nicht über die homogene Gastemperatur.

Die Anordnung der Einleitöffnung kann beispielsweise so sein, dass die Einleitöffnung nicht symmetrisch - also unsymmetrisch - zur Längsachse der Heizkammer angeordnet ist. Bei Betrachtung des Querschnitts der Einleitöffnung in Richtung Heizkammer senkrecht zur Längsachse der Heizkammer ist der Querschnitt also nicht von der Längsachse symmetrisch in zwei gleiche Hälften geteilt beziehungsweise überhaupt nicht geteilt. Eine derartige Anordnung der Einleitöffnung kann auch als außermittig bezeichnet werden, speziell bei einer bezüglich der Längsachse symmetrischen Ausbildung der Heizkammer. Bei einer solchen außermittigen Anordnung kann der eingeleitete Strom des Vorläufergases spiralförmig an der Heizkammerlängswand entlang strömen; der Strom wird nicht auf die Längsachse zielend eingeleitet, sondern beispielsweise zumindest teilweise tangential zur Heizkammerlängswand. Dabei ist es bevorzugt, dass der hydraulische Durchmesser der Einleitöffnung im Bereich von 25% bis 75% des hydraulischen Heizkammerdurchmessers auf der Höhe der Einleitöffnung liegt. Wenn die Heizkammer einen zylindrischen Teil Einleitteil mit Einleitöffnung und einen konischen Ausleitteil mit Ausleitöffnung umfasst, ist es bevorzugt, dass der hydraulische Durchmesser der Einleitöffnung im Bereich von 25% bis 75% des Durchmessers des Einleitteils liegt.

Wenn die Heizkammer einen zylindrischen Teil Einleitteil mit Einleitöffnung und einen konischen Ausleitteil mit Ausleitöffnung umfasst, ist es bevorzugt, dass das Verhältnis Höhe des Einleitteils zum Durchmesser des Einleitteils im Bereich von 1 bis 10 liegt, bevorzugt 1 bis 5, besonders bevorzugt 1 bis 2,5.

Wenn die Heizkammer einen zylindrischen Teil Einleitteil mit Einleitöffnung und einen konischen Ausleitteil mit Ausleitöffnung umfasst, ist es bevorzugt, dass der Winkel der Heizkammerseitenwand des Ausleitteils zur Längsachse im Bereich 5° - 45° liegt.

Vorzugsweise umfasst die Gasheizvorrichtung zumindest eine Heizkammer, in der mehrere Plasmabrenner vorhanden sind. Die Energie zum Heizen kann also an mehreren Stellen eingebracht werden. Dass hat den Effekt, dass die lokale Hitzebelastung der Heizkammer reduziert wird; statt die gesamte Energie an einer Stelle einzubringen, wird an mehreren Stellen jeweils weniger Energie eingebracht. Dadurch wird die lokale Temperaturbelastung auf eine größere Fläche aufgeteilt. Für die Anordnung der Plasmabrenner gibt es eine Vielzahl von Möglichkeiten. Insbesondere sind mögliche Anordnungsformen ringförmig, halb- oder teilkreisförmig radial um die Längsachse der Heizkammer angeordnet. Die Anordnung kann auch mehrere Ringe von Plasmabrennern in Richtung der Längsachse der Heizkammer hintereinander sein, oder auch nur einzelne Plasmabrenner in Richtung der Längsachse der Heizkammer hintereinander. Die Längsachse der Heizkammer ist in Richtung der Längserstreckung von einer Gaseinlassöffnung in die Heizkammer zu einer Gasauslassöffnung der Heizkammer; im Betrieb fließt das Vorläufergas von der Gaseinlassöffnung zur Gasauslassöffnung.

Der Richtungsvektor der eintretenden Plasmabrennerströmung kann entweder axial oder zumindest teilweise axial und/oder tangential oder zumindest teilweise tangential zur Strömung des Vorläufergases von der Gaseinlassöffnung zur Gasauslassöffnung erfolgen. Dabei kann sie so gerichtet werden, dass die thermische Belastung der Heizkammer minimiert und/oder die Gasdurchmischung maximiert wird. Dabei können beispielsweise gezielt Tangentialströmung, Wirbelströmungen oder auch andere vorteilhafte Strömungsmuster erzielt werden.

Heizkammern sind üblicherweise mit Feuerfestmaterial ausgemauert. Vorzugsweise weist zumindest eine Heizkammer Kühlleitungen auf. So kann zumindest teilweise vor oder hinter Ausmauerungsmaterial oder anstelle Ausmauerungsmaterial mittel Kühlwasser, Dampf oder anderen Medien gekühlt werden.

### Kurze Beschreibung der Zeichnungen

Die Erfindung wird anhand schematischer beispielhafter Darstellungen von Ausführungsformen erläutert.
Figur 1 zeigt schematisch eine Ausführungsform eines erfindungsgemäßen Verfahrens und einer erfindungsgemäßen Vorrichtung zur Direktreduktion von Metalloxiden mittels eines Reduktionsgases.
Figuren 2a und 2b zeigen schematisch Längs- und Querschnitte durch eine Ausführungsform eines Teils einer elektrischen Gasheizvorrichtung.
Figur 3 zeigt schematisch einen Schnitt durch eine Ausführungsform eines Teils einer elektrischen Gasheizvorrichtung.
Figuren 4a bis 4i zeigen schematisch Varianten der Anordnung von Plasmabrennern in einer Heizkammer einer Gasheizvorrichtung.
Figuren 5a und 5b zeigen schematisch Längs- und Querschnitte durch eine Heizkammer in einer Ausführungsform.
Figuren 6a und 6b zeigen schematisch Längs- und Querschnitte durch eine Heizkammer in einer anderen Ausführungsform.
Figuren 7 und 8 zeigen weitere Ausführungsformen weitgehend analog zu Figur 1.

### Beschreibung der Ausführungsformen

### Beispiele

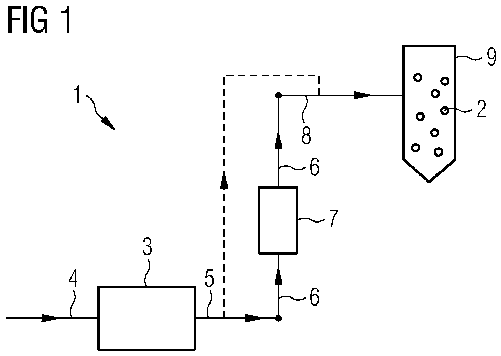

Figur 1 zeigt schematisch eine Ausführungsform einer erfindungsgemäße Vorrichtung zur Direktreduktion 1 von Metalloxiden 2 mittels eines Reduktionsgases.

In einem katalytischen Reformer 3 wird Reformergas hergestellt durch katalytische Reformierung von kohlenwasserstoffhaltigem Gas 4.

Das Reformergas wird durch die Reformergasleitung 5 aus dem katalytischen Reformer 3 ausgeleitet.

Von der Reformergasleitung 5 geht eine Vorläufergasleitung 6 aus. Die Vorläufergasleitung 6 umfasst eine elektrische Gasheizvorrichtung 7.

Das Vorläufergas basiert auf dem Reformergas und wird in der elektrischen Gasheizvorrichtung 7 mittels elektrischer Energie aufgeheizt. Die Vorläufergasleitung 6 mündet - in Strömungsrichtung vom Reformer weg gesehen hinter der elektrischen Gasheizvorrichtung 7 - in eine Reduktionsgasleitung 8. Diese mündet selber in ein Reduktionsaggregat 9, über sie wird Reduktionsgas in das Reduktionsaggregat 9 eingeleitet.

In dem Reduktionsaggregat 9 befinden sich die Metalloxide; im dargestellten Fall ist das Reduktionsaggregat 9 ein Reduktionsschacht, in dem ein festes, die Metalloxide umfassendes Materialbett liegt. Im Reduktionsaggregat 9 werden die Metalloxide 2 mittels des das Materialbett durchströmenden Reduktionsgases direktreduziert.

Optional kann die Reformergasleitung 5 auch zusätzlich eine Mündung in die Reduktionsgasleitung 8 aufweisen; das ist mit einer strichliert eingezeichneten Abzweigung von Reformergasleitung 5 dargestellt. Auf diese Weise kann etwas Reformergas im Bypass an der Gasheizvorrichtung 7 vorbei geführt und als Zusatzgas dem aufgeheizten Vorläufergas zugegeben werden.

Grundsätzlich könnten in Figur lzwecks Zubereitung des Reduktionsgases auch noch weitere Vorläufergasleitungen vorhanden sein zur Zuführung weiterer Vorläufergase; das ist zur besseren Übersichtlichkeit nicht extra dargestellt.

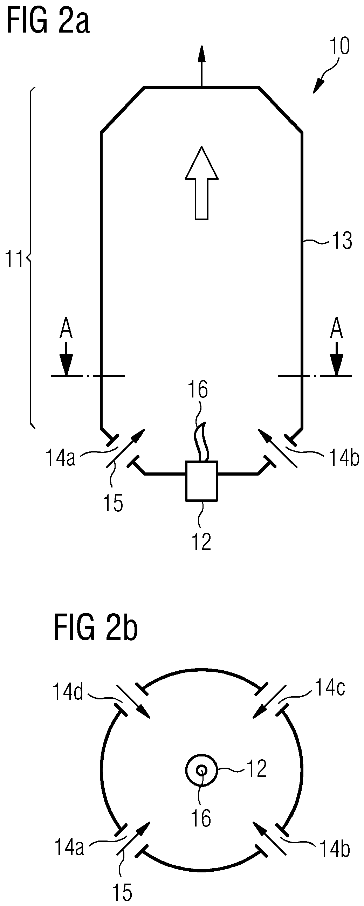

Figuren 2a und 2b zeigen Längs- und Querschnitte durch eine Ausführungsform eines Teils einer elektrischen Gasheizvorrichtung 10, die eine Heizkammer 11 mit einem Plasmabrenner 12 aufweist. Der Plasmabrenner 12 ist in der Heizkammer 11 mittig angeordnet. Das ist im Querschnitt entlang der Linie A-A aus Figur 2a in Figur 2b gut zu sehen. Die im dargestellten Beispiel zylinderförmig runde Heizkammer 11 wird durch die Heizkammerlängswand 13 begrenzt. Vorläufergas wird - als Pfeil dargestellt - durch die Einleitöffnungen 14a, 14b, 14c, 14d in die Heizkammer 11 eingeleitet. Erhitztes Gas - dargestellt durch einen Blockpfeil - wird durch eine nicht extra dargestellte Ausleitöffnung aus der Heizkammer 11 ausgeleitet - dargestellt durch einen Pfeil. Das Vorläufergas wird zwischen den Heizkammerlängswand 13 und dem Plasmabrenner 12 in die Heizkammer 11 eingeleitet. Der dargestellte Strom des Vorläufergases 15 von der Einleitöffnung 14a befindet sich somit zwischen dem Plasma 16 und Heizkammerlängswand 13. Es könnten auch mehrere solche Heizkammern mit je einem Plasmabrenner in der elektrischen Gasheizvorrichtung vorhanden sein.

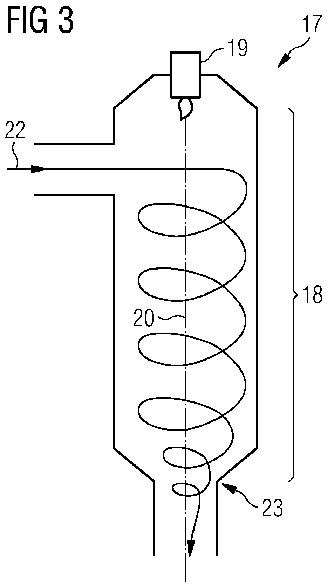

Figur 3 zeigt einen Schnitt durch eine Ausführungsform eines Teils einer elektrischen Gasheizvorrichtung 17, die eine Heizkammer 18 mit einem Plasmabrenner 19 aufweist. Die Heizkammer 18 ist im Wesentlichen zylinderförmig ausgeführt, wobei der Plasmabrenner 19 im Wesentlichen entlang der Zylinderachse 20 liegt. Durch eine Einleitvorrichtung 21 mit Einleitöffnung wird Vorläufergas 22 tangential in die Heizkammer 18 eingeleitet, und strömt nach der Einleitung um den Plasmabrenner 19 herum zur Ausleitöffnung 23. Durch die Ausleitöffnung 23 zum Ausleiten des erhitzten Gases verläuft die Zylinderachse 20. Es könnten auch mehrere solche Heizkammern mit je einem Plasmabrenner in der elektrischen Gasheizvorrichtung vorhanden sein.

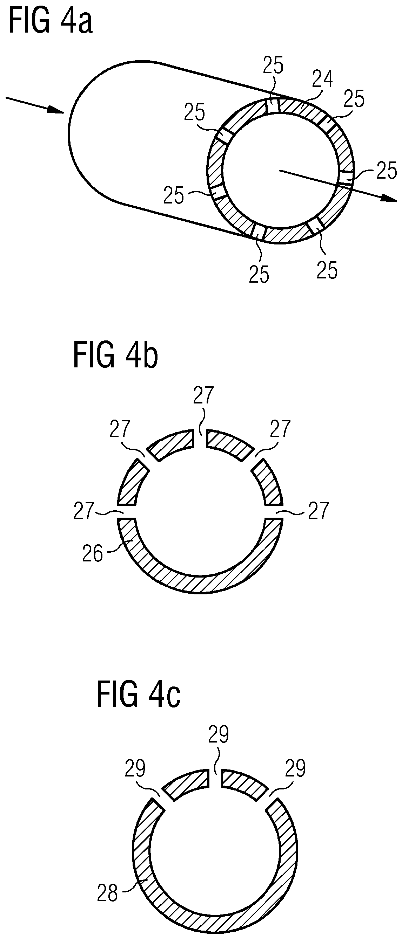

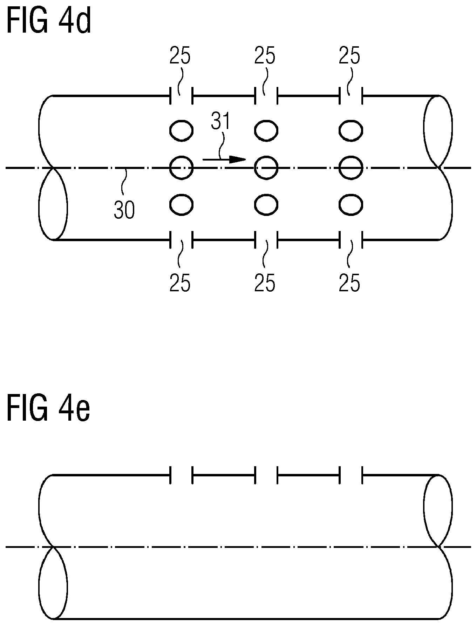

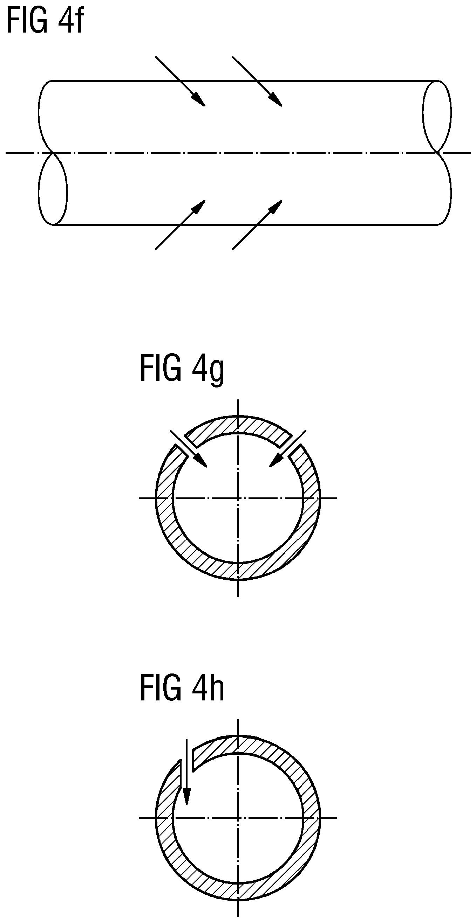

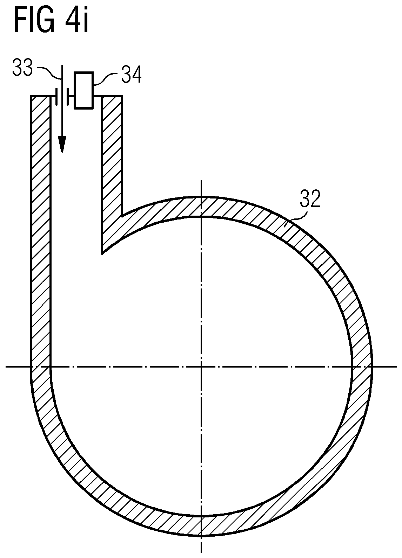

Figuren 4 a - i zeigen Varianten der Anordnung von Plasmabrennern in einer Heizkammer einer Gasheizvorrichtung, in der mehrere Plasmabrenner vorhanden sind. Insbesondere sind mögliche Anordnungsformen ringförmig, halb- oder teilkreisförmig radial um die Längsachse der Heizkammer angeordnet, was in den Figuren 4a, 4b, 4c dargestellt ist. Figur 4a zeigt in Schrägansicht in einem Schnitt durch eine zylindrische Heizkammer 24 senkrecht zur Längsachse - die der Flussrichtung des zu erhitzenden Gases, mit Pfeilen angedeutet, entspricht - , wie ringförmig mehrere Öffnungen 25 zur Montage von Plasmabrennern vorhanden sind. Die Plasmabrenner können mit ihrer Längsachse beispielsweise senkrecht oder schräg zur Längsachse der Heizkammer 24 stehen. Figur 4b zeigt in einem Schnitt durch eine zylindrische Heizkammer 26 senkrecht zur Längsachse - die der Flussrichtung des zu erhitzenden Gases entspricht - , wie halbkreisförmig mehrere Öffnungen 27 zur Montage von Plasmabrennern vorhanden sind. Figur 4c zeigt in einem Schnitt durch eine zylindrische Heizkammer 28 senkrecht zur Längsachse - die der Flussrichtung des zu erhitzenden Gases entspricht - , wie halbkreisförmig mehrere Öffnungen 29 zur Montage von Plasmabrennern vorhanden sind.

Figur 4d zeigt in einem Längsschnitt durch einen Abschnitt einer Heizkammer wie in Figur 4a, wie mehrere Ringe von Plasmabrennern installiert werden können; gezeigt sind die Öffnungen 25 zur Montage, die Längsachse 30 der Heizkammer und die Gasflussrichtung 31. Figur 4e zeigt das in entsprechender Ansicht für eine Anordnung, bei der nur jeweils ein Plasmabrenner pro Position entlang der Längsachse vorhanden ist.

Figur 4f zeigt in entsprechender Ansicht ein Beispiel dafür, wie die Plasmabrenner bezüglich der Längsachse orientier sein können. Die Pfeile deuten an, dass die Plasmabrenner zur Längsachse geneigt sind. Figuren 4g und 4h zeigen in zu der Figur 4a weitgehend analoger Ansicht, dass die durch Pfeile angedeuteten Plasmabrenner auf das Zentrum des Gasstromes gerichtet sein können - in Figur 4g dargestellt -, oder praktisch tangential zur Gasströmung - in Figur 4h dargestellt. Der Richtungsvektor der eintretenden Plasmabrennerströmung - die den Pfeilrichtungen in den Figuren 4g und 4h entspricht - kann also zumindest teilweise axial und/oder zumindest teilweise tangential zur Strömung des Gases von der Gaseinlassöffnung zur Gasauslassöffnung erfolgen.

In Figur 4i ist schematisch anhand eines Schnittes senkrecht zur Längsachse einer Variante einer Heizkammer 32 gezeigt, wie der aufzuheizende Gasstrom 33 zwischen Plasmabrenner 34 und Wand der Heizkammer 32 eingebracht wird.

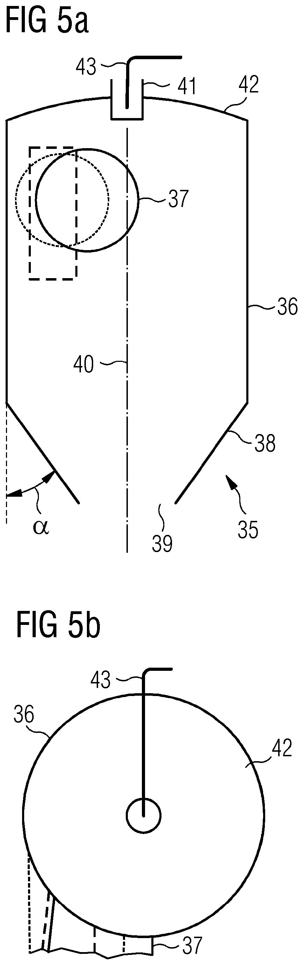

Figur 5a zeigt einen Längsschnitt durch eine Heizkammer 35, die einen zylindrischen Teil Einleitteil 36 mit Einleitöffnung 37 und einen konischen Teil Ausleitteil 38 mit Ausleitöffnung 39 umfasst.

Der hydraulische Durchmesser der Einleitöffnung 37 beträgt 45% des Durchmessers des Einleitteils.

Das Verhältnis Durchmesser der Einleitöffnung 37 zum Radius des Einleitteils 36 beträgt 90%.

Der Winkel α der Heizkammerseitenwand des Ausleitteils zur Längsachse 40 beträgt 35°.

Der Plasmabrenner 41 ist mittig im Deckelteil 42 angeordnet, eine Trägergasleitung 43 zur Zufuhr von Trägergas ist auch eingezeichnet.

Die Einleitöffnung ist nicht symmetrisch - also unsymmetrisch - zur Längsachse der Heizkammer angeordnet. Bei einer solchen außermittigen Anordnung kann der eingeleitete Strom des Vorläufergases spiralförmig an der Heizkammerlängswand - im Einleitteil und im Ausleitteil - entlang strömen; der Strom wird nicht radial auf die Längsachse zielend eingeleitet, sondern tangential zur Heizkammerlängswand.

Zur Illustration einer Auswahl von anderen Möglichkeiten der Form der Einleitöffnung beziehungsweise ihrer Positionierung bezüglich der Längsachse 40 sind Umrisse einer runden Einleitöffnung mit gepunkteter Linie und einer rechteckigen Einleitöffnung mit strichlierter Linie eingezeichnet.

Figur 5b zeigt eine Ansicht der in Figur 5a gezeigten Vorrichtung von oben. Analog zur Figur 5a sind auch Umrisse von Varianten der Einleitöffnung mit gepunkteter und mit strichlierter Linie eingezeichnet.

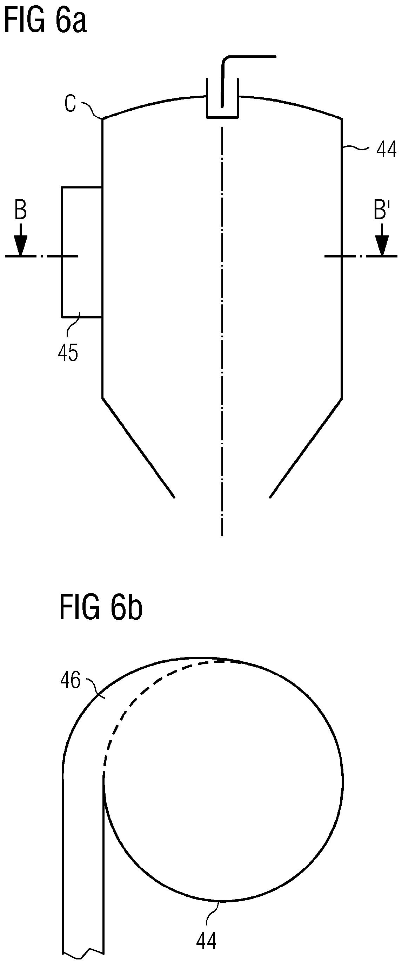

Figur 6a und 6b zeigen in zu Figur 5a und 5b weitgehend analogen Ansichten eine Ausführungsform, in der am Einleitteil 44 die Einleitöffnung 45 im Vergleich zu Figur 5a seitlich versetzt ist. Einleitung des aufzuheizenden Gasstromes in den zylindrischen Teil Einleitteil 44 erfolgt spiralförmig.

Figur 6b zeigt anhand eines Schnittes entlang F-F' von oben betrachtet schematisch, wie die Einleitung spiralförmig um den zylindrischen Einleitteil 44 herumgezogen ist. Die strichlierte Linie zeigt den Umriss der Kante C in dem Bereich der Einmündung der Einleitöffnung in den zylindrischen Einleitteil.

Der spiralförmige Teil könnte sich auch weniger weit oder weiter erstrecken; es könnte auch die Form des gesamten Einleitteils der durch die Einleitung 46 vorgegebenen Spirale folgen.

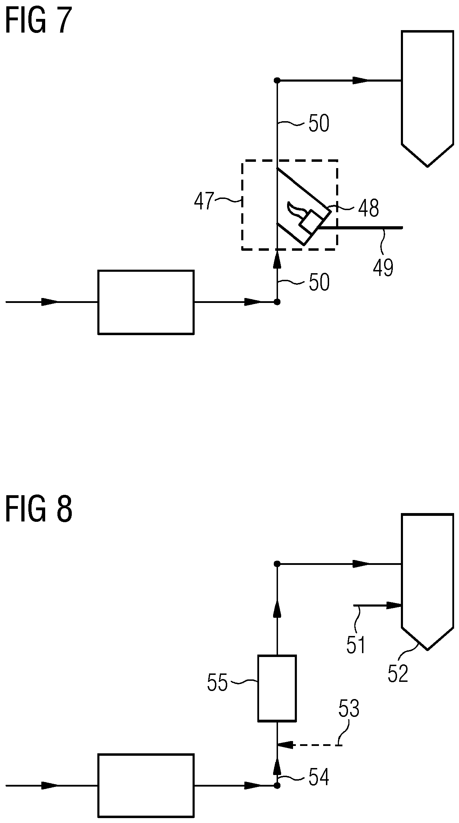

Figur 7 zeigt analog zu Figur 1, wie in der elektrischen Gasheizvorrichtung 47 ein Plasmabrenner 48, dessen Plasma mit elektrischer Energie unter Nutzung von Trägergas aus der Trägergasleitung 49 erzeugt wird, in der Gasheizvorrichtung 47 das Vorläufergas Reformergas in der Vorläufergasleitung 50 erhitzt. Die elektrische Energie wird mittels Plasma in das Vorläufergas eingebracht.

Figur 8 zeigt weitgehend analog zu Figur 1 eine Ausführungsform einer erfindungsgemäße Vorrichtung, in der eine Zusatzreduktionsgasleitung 51 zur Einleitung von Zusatzreduktionsgas in das Reduktionsaggregat 52 vorhanden ist. Dargestellt ist auch strichliert die optional erfolgende Zugabe von Erdgas 53 in die Vorläufergasleitung 54 vor der elektrischen Gasheizvorrichtung 55. Erhitzt wird ein Vorläufergas, das eine Mischung aus Erdgas 53 und Reformergas ist; dieses Vorläufergas basiert auf Reformergas.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne von dem durch die beigefügten Ansprüche definierten Schutzumfang der Erfindung zu verlassen.

### Liste der Bezugszeichen

- 1: Vorrichtung zur Direktreduktion
- 2: Metalloxide
- 3: Reformer
- 4: kohlenwasserstoffhaltiges Gas
- 5: Reformergasleitung
- 6,6',6",6‴: Vorläufergasleitung
- 7: Gasheizvorrichtung
- 8: Reduktionsgasleitung
- 9: Reduktionsaggregat
- 10: Gasheizvorrichtung
- 11: Heizkammer
- 12: Plasmabrenner
- 13: Heizkammerlängswand
- 14a,14b,14c,14d: Einleitöffnungen
- 15: Vorläufergas
- 16: Plasma
- 17: Gasheizvorrichtung
- 18: Heizkammer
- 19: Plasmabrenner
- 20: Zylinderachse
- 21: Einleitvorrichtung
- 22: Vorläufergas
- 23: Ausleitöffnung
- 24: Heizkammer
- 25: Öffnungen zur Montage von Plasmabrennern
- 26: Heizkammer
- 27: Öffnungen zur Montage von Plasmabrennern
- 28: Heizkammer
- 29: Öffnungen zur Montage von Plasmabrennern
- 30: Längsachse
- 31: Gasflussrichtung
- 32: Heizkammer
- 33: aufzuheizender Gasstrom
- 34: Plasmabrenner
- 35: Heizkammer
- 36: Einleitteil
- 37: Einleitöffnung
- 38: Ausleitteil
- 39: Ausleitöffnung
- 40: Längsachse
- 41: Plasmabrenner
- 42: Deckelteil
- 43: Trägergasleitung
- 44: Einleitteil
- 45: Einleitöffnung
- 46: Einleitung
- 47: Gasheizvorrichtung
- 48: Plasmabrenner
- 49: Trägergasleitung
- 50: Vorläufergasleitung
- 51: Zusatzreduktionsgasleitung
- 52: Reduktionsaggregat
- 53: Erdgas
- 54: Vorläufergasleitung
- 55: Gasheizvorrichtung

## Patentansprüche

1. Verfahren zur Direktreduktion von Metalloxiden (2) unter Verwendung eines Reduktionsgases,
das auf zumindest einem Vorläufergas basiert,
wobei zumindest ein Vorläufergas (15,22)
auf durch katalytische Reformierung von kohlenwasserstoffhaltigem Gas (4) in einem Reformer (3) erhaltenem Reformergas basiert,
**dadurch gekennzeichnet, dass**
bei der Zubereitung des Reduktionsgases zumindest ein auf Reformergas basierendes Vorläufergas, optional zusätzlich auch ein oder mehrere weitere Vorläufergase, mittels elektrischer Energie aufgeheizt wird,
wobei zumindest eine Teilmenge der elektrischen Energie mittels Plasma (16) in das Vorläufergas (15,22) eingebracht wird.

2. Verfahren nach Anspruch 1, **dadurch gekennzeichnet, dass** das auf Reformergas basierende Vorläufergas durch die elektrische Energie auf eine Temperatur aufgeheizt wird, die in einem Ausmaß von bis zu 200°C über dessen Austrittstemperatur aus dem Reformer liegt.

3. Verfahren nach einem der Ansprüche 1 bis 2, **dadurch gekennzeichnet, dass** für elektrische Aufheizung vorgesehenes Vorläufergas (15,22) vor der Aufheizung mittels elektrischer Energie bereits auf andere Weise aufgeheizt wird, bevorzugt auf zumindest 700 °C, besonders bevorzugt auf zumindest 750 °C.

4. Verfahren nach einem der Ansprüche 1 bis 3, **dadurch gekennzeichnet, dass** für elektrische Aufheizung vorgesehenes Vorläufergas (15,22) mittels elektrischer Energie auf über 800°C, bevorzugt auf über 900°C, aufgeheizt wird.

5. Verfahren nach einem der Ansprüche 1 bis 4, **dadurch gekennzeichnet, dass** die Temperatur des Reduktionsgases bei seiner Einleitung in ein die zu reduzierenden Metalloxide enthaltendes Reduktionsaggregat (9) zumindest über 800 °C, bevorzugt zumindest über 900°C, besonders bevorzugt zumindest 940°C, und bis zu 1100°C, bevorzugt bis zu 1050°C, besonders bevorzugt bis zu 1000°C, beträgt.

6. Verfahren nach einem der Ansprüche 1 bis 5, **dadurch gekennzeichnet, dass** einem Vorläufergas (15,22), das mittels elektrischer Energie aufgeheizt wird, kohlenwasserstoffhaltiges Zusatzgas zugegeben wird vor und/oder während und/oder nachdem mittels elektrischer Energie aufgeheizt wird.

7. Verfahren nach einem der Ansprüche 1 bis 6, **dadurch gekennzeichnet, dass** zumindest eine Teilmenge des kohlenwasserstoffhaltigen Zusatzgases in-situ reformiert wird, bevor das Reduktionsgas in ein die Metalloxide (2) enthaltendes Reduktionsaggregat (9) eingeleitet wird.

8. Verfahren nach einem der Ansprüche 1 bis 7, **dadurch gekennzeichnet, dass** zumindest eine Teilmenge eines kohlenwasserstoffhaltigen Vorläufergases in situ reformiert wird, bevor das Reduktionsgas in ein die Metalloxide (2) enthaltendes Reduktionsaggregat (9) eingeleitet wird.

9. Verfahren nach einem der Ansprüche 1 bis 8, **dadurch gekennzeichnet, dass** zur Direktreduktion von Metalloxiden (2) zumindest ein Zusatzreduktionsgas verwendet wird.

10. Vorrichtung zur Direktreduktion (1) von Metalloxiden (2) mittels eines Reduktionsgases,
umfassend
einen katalytischen Reformer (3) zur Herstellung eines Reformergases,
eine Reformergasleitung (5) zur Ausleitung von Reformergas aus dem katalytischen Reformer (3),
ein Reduktionsaggregat (9),
eine Reduktionsgasleitung (8) zur Einleitung von Reduktionsgas in das Reduktionsaggregat (9),
**dadurch gekennzeichnet, dass**
die Vorrichtung zumindest eine Vorläufergasleitung (6) umfasst,
und zumindest eine Vorläufergasleitung (6) eine elektrische Gasheizvorrichtung (7,10,17) umfasst,
und zumindest eine Vorläufergasleitung (6) von der Reformergasleitung (5) ausgeht,
wobei zumindest eine von der Reformergasleitung ausgehende Vorläufergasleitung eine elektrische Gasheizvorrichtung umfasst,
und wobei jede Vorläufergasleitung (6) in die Reduktionsgasleitung (8) mündet,
und wobei die elektrische Gasheizvorrichtung (10) zumindest zwei Plasmabrenner umfasst, ganz besonders bevorzugt zumindest drei Plasmabrenner.

11. Vorrichtung nach Anspruch 10, **dadurch gekennzeichnet, dass** die Vorrichtung zur Direktreduktion (1) zumindest eine Zusatzreduktionsgasleitung (35) zur Einleitung von Zusatzreduktionsgas in das Reduktionsaggregat (9) umfasst.

12. Vorrichtung nach einem der Ansprüche 10 bis 12, **dadurch gekennzeichnet, dass** die elektrische Gasheizvorrichtung (10) zumindest eine Heizkammer (11) mit einem Plasmabrenner (12) umfasst, mit zumindest einer Ausleitöffnung zur Ausleitung von erhitztem Gas, und mit zumindest einer Einleitöffnung (14a,14b) zur Einleitung von Vorläufergas (15), und mit zumindest einer Heizkammerlängswand (13) in Längserstreckung von der Einleitöffnung zur Ausleitöffnung gesehen, wobei der Plasmabrenner (12) mittig in der Heizkammer (11) angeordnet ist, und wobei die Einleitöffnung (14a,14b) zwischen Plasmabrenner (12) und Heizkammerlängswand (13) angeordnet ist.

13. Vorrichtung nach einem der Ansprüche 10 bis 13, **dadurch gekennzeichnet, dass** die elektrische Gasheizvorrichtung (17) zumindest eine Heizkammer (18) mit einem Plasmabrenner (19) umfasst, mit zumindest einer Ausleitöffnung (23) zur Ausleitung von erhitztem Gas, und mit zumindest einer Einleitöffnung zur Einleitung von Vorläufergas (22), und mit zumindest einer Heizkammerlängswand in Längserstreckung von der Einleitöffnung zur Ausleitöffnung (23) gesehen, wobei die Einleitöffnung so angeordnet ist und die Heizkammer (18) so ausgeformt ist, dass ein eingeleiteter Strom des Vorläufergases (22) spiralförmig um den Plasmabrenner (19) herum zwischen Plasmabrenner (19) und Heizkammerlängswand von der Einleitöffnung zur Ausleitöffnung (23) strömt.

14. Vorrichtung nach Anspruch 14, **dadurch gekennzeichnet, dass** die Einleitöffnung unsymmetrisch zur Längsachse der Heizkammer angeordnet ist, und geeignet ist, Vorläufergas tangential zur Heizkammerlängswand in die Heizkammer zu leiten.

15. Vorrichtung nach Anspruch 14 oder 15, **dadurch gekennzeichnet, dass** der hydraulische Durchmesser der Einleitöffnung im Bereich von 25% bis 75% des hydraulischen Heizkammerdurchmessers liegt.

16. Vorrichtung nach Anspruch 14 oder 15, **dadurch gekennzeichnet, dass** die Heizkammer einen zylindrischen Teil Einleitteil mit Einleitöffnung und einen konischen Ausleitteil mit Ausleitöffnung umfasst, und der hydraulische Durchmesser der Einleitöffnung im Bereich von 25% bis 75% des Durchmessers des Einleitteils liegt.

17. Vorrichtung nach einem der Ansprüche 13, 14, 16, **dadurch gekennzeichnet, dass** die Heizkammer einen zylindrischen Teil Einleitteil mit Einleitöffnung und einen konischen Ausleitteil mit Ausleitöffnung umfasst, wobei das Verhältnis Höhe des Einleitteils zum Durchmesser des Einleitteils im Bereich von 1 bis 10 liegt, bevorzugt 1 bis 5, besonders bevorzugt 1 bis 2,5.

18. Vorrichtung nach einem der Ansprüche 13, 14, 16, 17, **dadurch gekennzeichnet, dass** die Heizkammer einen zylindrischen Teil Einleitteil mit Einleitöffnung und einen konischen Ausleitteil mit Ausleitöffnung umfasst, wobei der Winkel der Heizkammerseitenwand des Ausleitteils zur Längsachse im Bereich 5° - 45° liegt.

19. Vorrichtung nach einem der Ansprüche 10 bis 18, **dadurch gekennzeichnet, dass** die Gasheizvorrichtung (7,10,17) zumindest eine Heizkammer, in der mehrere Plasmabrenner vorhanden sind, umfasst.

## Claims

1. Method of direct reduction of metal oxides (2) using a reduction gas based on at least one precursor gas,
wherein at least one precursor gas (15, 22) is based on reformer gas obtained by catalytic reforming of hydrocarbonaceous gas (4) in a reformer (3),
**characterized in that**
preparation of the reduction gas involves heating at least one precursor gas based on reformer gas, and optionally additionally also one or more further precursor gases, by means of electrical energy,
wherein at least a portion of the electrical energy is introduced into the precursor gas (15, 22) by means of plasma (16).

2. Method according to Claim 1, **characterized in that** the precursor gas based on reformer gas is heated by the electrical energy to a temperature within a range of up to 200°C above its exit temperature from the reformer.

3. Method according to either of Claims 1 and 2, **characterized in that** precursor gas (15, 22) envisaged for electrical heating, prior to the heating by means of electrical energy, is already heated in another way, preferably to at least 700°C, more preferably to at least 750°C.

4. Method according to any of Claims 1 to 3, **characterized in that** precursor gas (15, 22) envisaged for electrical heating is heated up by means of electrical energy to more than 800°C, preferably to more than 900°C.

5. Method according to any of Claims 1 to 4, **characterized in that** the temperature of the reduction gas on introduction into a reduction unit (9) containing the metal oxides to be reduced is at least above 800°C, preferably at least above 900°C, more preferably at least 940°C, and up to 1100°C, preferably up to 1050°C, more preferably up to 1000°C.

6. Method according to any of Claims 1 to 5, **characterized in that** hydrocarbonaceous additional gas is added to a precursor gas (15, 22) which is heated by means of electrical energy before and/or during and/or after heating by means of electrical energy.

7. Method according to any of Claims 1 to 6, **characterized in that** at least a portion of the hydrocarbonaceous additional gas is reformed in situ before the reduction gas is introduced into a reduction unit (9) containing the metal oxides (2).

8. Method according to any of Claims 1 to 7, **characterized in that** at least a portion of a hydrocarbonaceous precursor gas is reformed in situ before the reduction gas is introduced into a reduction unit (9) containing the metal oxides (2).

9. Method according to any of Claims 1 to 8, **characterized in that** direct reduction of metal oxides (2) is accomplished using at least one additional reduction gas.

10. Apparatus for direct reduction (1) of metal oxides (2) by means of a reduction gas, comprising
a catalytic reformer (3) for production of a reformer gas, a reformer gas conduit (5) for discharge of reformer gas from the catalytic reformer (3),
a reduction unit (9),
a reduction gas conduit (8) for introduction of reduction gas into the reduction unit (9),
**characterized in that** the apparatus comprises at least one precursor gas conduit (6), and at least one precursor gas conduit (6) comprises an electrical gas heating apparatus (7, 10, 17), and at least one precursor gas conduit (6) proceeds from the reformer gas conduit (5),
wherein at least one precursor gas conduit that proceeds from the reformer gas conduit comprises an electrical gas heating apparatus,
and wherein each precursor gas conduit (6) opens into the reduction gas conduit (8), and wherein the electrical gas heating apparatus (10) comprises at least two plasma burners, most preferably at least three plasma burners.

11. Apparatus according to Claim 10, **characterized in that** the apparatus for direct reduction (1) comprises at least one additional reduction gas conduit (35) for introduction of additional reduction gas into the reduction unit (9).

12. Apparatus according to any of Claims 10 to 12, **characterized in that** the electrical gas heating apparatus (10) comprises at least one heating chamber (11) having a plasma burner (12), having at least one exit opening for exit of heated gas, and having at least one entry opening (14a, 14b) for entry of precursor gas (15), and having at least one longitudinal heating chamber wall (13) extending longitudinally when viewed from the entry opening toward the exit opening, wherein the plasma burner (12) is disposed in the middle of the heating chamber (11), and wherein the entry opening (14a, 14b) is disposed between plasma burner (12) and longitudinal heating chamber wall (13).

13. Apparatus according to any of Claims 10 to 13, **characterized in that** the electrical gas heating apparatus (17) comprises at least one heating chamber (18) having a plasma burner (19), having at least one exit opening (23) for exit of heated gas, and having at least one entry opening for entry of precursor gas (22), and having at least one longitudinal heating chamber wall extending longitudinally when viewed from the entry opening toward the exit opening (23), wherein the entry opening is disposed and the heating chamber (18) shaped such that an introduced stream of the precursor gas (22) flows from the entry opening to the exit opening (23) in spiral form around the plasma burner (19) between plasma burner (19) and longitudinal heating chamber wall.

14. Apparatus according to Claim 14, **characterized in that** the entry opening is in an unsymmetric arrangement relative to the longitudinal axis of the heating chamber, and is capable of guiding precursor gas into the heating chamber tangentially to the longitudinal heating chamber wall.

15. Apparatus according to Claim 14 or 15, **characterized in that** the hydraulic diameter of the entry opening is in the range from 25% to 75% of the hydraulic heating chamber diameter.

16. Apparatus according to Claim 14 or 15, **characterized in that** the heating chamber comprises a cylindrical entry section with entry opening and a conical exit section with exit opening, and the hydraulic diameter of the entry opening is in the range from 25% to 75% of the diameter of the entry section.

17. Apparatus according to any of Claims 13, 14 and 16, **characterized in that** the heating chamber comprises a cylindrical entry section with entry opening and a conical exit section with exit opening, where the ratio of height of the entry section to the diameter of the entry section is in the range from 1 to 10, preferably 1 to 5, more preferably 1 to 2.5.

18. Apparatus according to any of Claims 13, 14, 16 and 17, **characterized in that** the heating chamber comprises a cylindrical entry section with entry opening and a conical exit section with exit opening, where the angle of the lateral heating chamber wall of the exit section to the longitudinal axis is in the range of 5°-45°.

19. Apparatus according to any of Claims 10 to 18, **characterized in that** the gas heating apparatus (7, 10, 17) comprises at least one heating chamber in which there are multiple plasma burners.

## Revendications

1. Procédé destiné à la réduction directe d'oxydes métalliques (2) en utilisant un gaz de réduction qui se base sur au minimum un gaz faisant office de précurseur ; dans lequel au moins un gaz (15, 22) faisant office de précurseur se base sur un gaz qui a été soumis à un reformage, que l'on obtient par l'intermédiaire d'un reformage catalytique d'un gaz (4) qui contient des hydrocarbures, dans un reformeur (3),
**caractérisé en ce que**,
au cours de la préparation du gaz de réduction, on chauffe au moins un gaz faisant office de précurseur qui se base sur un gaz qui a été soumis à un reformage, de manière facultative en outre également sur un ou plusieurs gaz supplémentaire (s) faisant office de précurseur(s), en faisant appel à de l'énergie électrique ;
dans lequel on introduit au moins une quantité partielle de l'énergie électrique au moyen d'un plasma (16) dans le gaz (15, 22) faisant office de précurseur.

2. Procédé selon la revendication 1, **caractérisé en ce que** le gaz faisant office de précurseur qui se base sur un gaz qui a été soumis à un reformage est chauffé par l'énergie électrique à une température qui se situe dans une plage allant jusqu'à 200 °C au-delà de sa température de sortie à partir du reformeur.

3. Procédé selon l'une quelconque des revendications 1 à 2, **caractérisé en ce que** l'on chauffe le gaz (15, 22) faisant office de précurseur qui est prévu pour le chauffage électrique, avant le chauffage en faisant appel à de l'énergie électrique, déjà d'une autre manière, de préférence à au moins 700 °C, de manière particulièrement préférée à au moins 750 °C.

4. Procédé selon l'une quelconque des revendications 1 à 3, **caractérisé en ce que** l'on chauffe le gaz (15, 22) faisant office de précurseur qui est prévu pour le chauffage électrique, en faisant appel à de l'énergie électrique à une température supérieure à 800 °C, de préférence à une température supérieure à 900 °C.

5. Procédé selon l'une quelconque des revendications 1 à 4, **caractérisé en ce que** la température du gaz de réduction, au cours de son introduction dans une installation de réduction (9) qui contient les oxydes métalliques qui font l'objet d'une réduction, s'élève à une valeur au moins supérieure à 800 °C, de préférence au moins supérieure à 900 °C, de manière particulièrement préférée s'élève à au moins 940 °C, et jusqu'à une température de 1100 °C, de préférence jusqu'à 1050 °C, de manière particulièrement préférée jusqu'à 1000 °C.

6. Procédé selon l'une quelconque des revendications 1 à 5, **caractérisé en ce que** l'on ajoute un gaz supplémentaire qui contient des hydrocarbures à un gaz (15, 22) faisant office de précurseur, que l'on chauffe en faisant appel à de l'énergie électrique, avant et/ou pendant et/ou après son chauffage en faisant appel à de l'énergie électrique.

7. Procédé selon l'une quelconque des revendications 1 à 6, **caractérisé en ce que** l'on soumet à un reformage in situ au moins une quantité partielle du gaz supplémentaire qui contient des hydrocarbures, avant d'introduire le gaz de réduction dans une installation de réduction (9) qui contient les oxydes métalliques (2).

8. Procédé selon l'une quelconque des revendications 1 à 7, **caractérisé en ce que** l'on soumet à un reformage in situ au moins une quantité partielle d'un gaz faisant office de précurseur, qui contient des hydrocarbures, avant d'introduire le gaz de réduction dans une installation de réduction (9) qui contient les oxydes métalliques (2).

9. Procédé selon l'une quelconque des revendications 1 à 8, **caractérisé en ce que** l'on utilise, pour la réduction directe des oxydes métalliques (2), au moins un gaz de réduction supplémentaire.

10. Dispositif destiné à la réduction directe (1) d'oxydes métalliques (2) en faisant appel à un gaz de réduction,
qui comprend
un reformeur catalytique (3) qui est destiné à la préparation d'un gaz qui a été soumis à un reformage ;
un conduit (5) pour le gaz qui a été soumis à un reformage, destiné à l'évacuation du gaz qui a été soumis à un reformage à l'extérieur du reformeur catalytique (3) ;
une installation de réduction (9) ;
un conduit (8) pour le gaz de réduction, destiné à l'introduction du gaz de réduction dans l'installation de réduction (9) ;
**caractérisé en ce que**
le dispositif comprend au moins un conduit (6) pour le gaz faisant office de précurseur ;
et au moins un conduit (6) pour le gaz faisant office de précurseur comprend un dispositif électrique (7, 10, 17) pour le chauffage du gaz ;
et au moins un conduit (6) pour le gaz faisant office de précurseur émane du conduit (5) destiné au gaz qui a été soumis à un reformage ;
dans lequel au moins un conduit pour le gaz faisant office de précurseur qui émane du conduit pour le gaz qui a été soumis à un reformage comprend un dispositif électrique pour le chauffage du gaz ;
et dans lequel chaque conduit (6) pour le gaz faisant office de précurseur débouche dans le conduit (8) pour le gaz de réduction ;
et dans lequel le dispositif électrique (10) pour le chauffage du gaz comprend au moins deux brûleurs à plasma, de manière tout particulièrement préférée au moins trois brûleurs à plasma.

11. Dispositif selon la revendication 10, **caractérisé en ce que** le dispositif destiné à la réduction directe (1) comprend au moins un conduit (35) pour le gaz de réduction supplémentaire, qui est destiné à l'introduction du gaz de réduction supplémentaire dans l'installation de réduction (9).

12. Dispositif selon l'une quelconque des revendications 10 à 12, **caractérisé en ce que** le dispositif électrique (10) pour le chauffage du gaz comprend au moins une chambre de chauffe (11) qui comprend un brûleur à plasma (12), au moins une ouverture d'évacuation destinée à l'évacuation du gaz chauffé et au moins une ouverture d'introduction (14a, 14b) destinée à l'introduction du gaz (15) faisant office de précurseur, et qui comprend au moins une paroi longitudinale (13) de chambre de chauffe, lorsqu'on regarde dans l'étendue longitudinale depuis l'ouverture d'introduction jusqu'à l'ouverture d'évacuation ; dans lequel le brûleur à plasma (12) est monté en position centrale dans la chambre de chauffe (11) ; et dans lequel l'ouverture d'introduction (14a, 14b) est disposée entre le brûleur à plasma (12) et la paroi longitudinale (13) de la chambre de chauffe.

13. Dispositif selon l'une quelconque des revendications 10 à 13, **caractérisé en ce que** le dispositif électrique (17) pour le chauffage du gaz comprend au moins une chambre de chauffe (18) qui comprend un brûleur à plasma (19), au moins une ouverture d'évacuation (23) destinée à l'évacuation du gaz chauffé et au moins une ouverture d'introduction destinée à l'introduction du gaz (22) faisant office de précurseur, et au moins une paroi longitudinale de chambre de chauffe, lorsqu'on regarde dans l'étendue longitudinale depuis l'ouverture d'introduction jusqu'à l'ouverture d'évacuation (23) ; dans lequel l'ouverture d'introduction est disposée et la chambre de chauffe (18) est configurée d'une manière telle qu'un courant, du gaz (22) faisant office de précurseur, qui a été introduit s'écoule en formant une spirale tout autour du brûleur à plasma (19) entre le brûleur à plasma (19) et la paroi longitudinale de la chambre de chauffe depuis l'ouverture d'introduction jusqu'à l'ouverture d'évacuation (23).

14. Dispositif selon la revendication 14, **caractérisé en ce que** l'ouverture d'introduction est disposée de manière asymétrique par rapport à l'axe longitudinal de la chambre de chauffe et est appropriée pour guider le gaz faisant office de précurseur, dans une direction tangentielle par rapport à la paroi longitudinale de la chambre de chauffe, jusque dans la chambre de chauffe.

15. Dispositif selon la revendication 14 ou 15, **caractérisé en ce que** le diamètre hydraulique de l'ouverture d'introduction se situe dans la plage de 25 % à 75 % du diamètre hydraulique de la chambre de chauffe.

16. Dispositif selon la revendication 14 ou 15, **caractérisé en ce que** la chambre de chauffe comprend une partie de forme cylindrique faisant office d'introduction qui comprend une ouverture d'introduction et une partie de forme conique faisant office d'évacuation qui comprend une ouverture d'évacuation, et le diamètre hydraulique de l'ouverture d'introduction se situe dans la plage de 25 % à 75 % du diamètre de la partie faisant office d'introduction.

17. Dispositif selon l'une quelconque des revendications 13, 14, 16, **caractérisé en ce que** la chambre de chauffe comprend une partie de forme cylindrique faisant office d'introduction qui comprend une ouverture d'introduction et une partie de forme conique faisant office d'évacuation qui comprend une ouverture d'évacuation ; dans lequel le rapport entre la hauteur de la partie faisant office d'introduction et le diamètre de la partie faisant office d'introduction se situe dans la plage de 1 à 10, de préférence de 1 à 5, de manière particulièrement préférée de 1 à 2,5.

18. Dispositif selon l'une quelconque des revendications 13, 14, 16, 17, **caractérisé en ce que** la chambre de chauffe comprend une partie de forme cylindrique faisant office d'introduction qui comprend une ouverture d'introduction et une partie de forme conique faisant office d'évacuation qui comprend une ouverture d'évacuation ; dans lequel l'angle formé par la paroi latérale de chambre de chauffe de la partie faisant office d'évacuation par rapport à l'axe longitudinal se situe dans la plage de 5° à 45°.

19. Dispositif selon l'une quelconque des revendications 10 à 18, **caractérisé en ce que** le dispositif (7, 10, 17)pour le chauffage du gaz comprend au moins une chambre de chauffe dans laquelle sont présents plusieurs brûleurs à plasma.
